(19) Europäisches Patentamt
European Patent Office
Office européen des brevets

(11) **EP 4 564 879 A1**

(12) **EUROPEAN PATENT APPLICATION**
published in accordance with Art. 153(4) EPC

(43) Date of publication:
**04.06.2025 Bulletin 2025/23**

(21) Application number: **22955235.1**

(22) Date of filing: **15.08.2022**

(51) International Patent Classification (IPC):
**H04W 24/02** *(2009.01)*     **H04W 60/00** *(2009.01)*

(52) Cooperative Patent Classification (CPC):
**H04W 24/02; H04W 60/00**

(86) International application number:
**PCT/CN2022/112594**

(87) International publication number:
**WO 2024/036453 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• WANG, Fei
  Shenzhen, Guangdong 518129 (CN)
• PENG, Chenghui
  Shenzhen, Guangdong 518129 (CN)
• LU, Jiaxun
  Shenzhen, Guangdong 518129 (CN)
• WU, Jianjun
  Shenzhen, Guangdong 518129 (CN)

(74) Representative: **Epping - Hermann - Fischer**
**Patentanwaltsgesellschaft mbH**
**Schloßschmidstraße 5**
**80639 München (DE)**

(54) **FEDERATED LEARNING METHOD AND RELATED DEVICE**

(57)     This application discloses a federated learning method and a related apparatus, and relates to the field of communication technologies. The federated learning method includes: A first network element receives first information from a second network element, where the first information includes gradient information of a first collaboration set corresponding to the second network element, and the first collaboration set includes a collaboration network element configured to perform federated learning; and the first network element determines, based on the first information, to join the first collaboration set. In this method, the first network element may decide, based on the gradient information that is of the first collaboration set and that is delivered by the second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

FIG. 2

## Description

### TECHNICAL FIELD

This application relates to the field of communication technologies, and in particular, to a federated learning method and a related apparatus.

### BACKGROUND

Federated learning (federated learning) is a machine learning framework proposed for existence of "data silos", and can effectively help each participant (client network element) perform joint training when a data resource does not need to be shared, in other words, when training data is retained locally, to establish a shared machine learning model.

Federated learning in the field of artificial intelligence (artificial intelligence, AI) technologies usually improves accuracy and generalization of a training model by aggregating models on a plurality of client network elements, to expand data sets applicable to training.

However, in a current federated learning process, data sets of some client network elements are not suitable for being aggregated but participate in aggregation, consequently causing a problem of resource waste, and reducing efficiency of the federated learning.

### SUMMARY

Embodiments of this application provide a federated learning method and a related apparatus, to save a resource and improve efficiency of federated learning.

According to a first aspect, an embodiment of this application provides a federated learning method. The method includes:

A first network element receives first information from a second network element, where the first information includes gradient information of a first collaboration set corresponding to the second network element, and the first collaboration set includes a collaboration network element configured to perform federated learning.

The first network element determines, based on the first information, to join the first collaboration set.

In this embodiment of this application, the federated learning method is provided. The first network element receives the first information from the second network element, and determines, based on the first information, to join the first collaboration set to perform federated learning. The first information includes the gradient information of the first collaboration set corresponding to the second network element, and the first collaboration set includes a collaboration network element currently used to perform federated learning. The first network element may determine based on the gradient information of the first collaboration set. When the gradient information of the first collaboration set meets a specific condition, the first network element determines to join the first collaboration set to perform federated learning. When the gradient information of the first collaboration set does not meet a specific condition, the first network element determines not to join the first collaboration set. According to this embodiment of this application, the first network element may decide, based on the gradient information that is of the first collaboration set and that is delivered by the second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In an implementation of this application, a possible specific implementation of the gradient information of the first collaboration set is provided. Specifically, the gradient information of the first collaboration set may include the sum of the norms of the gradients corresponding to the first collaboration set and the sum of the gradients corresponding to the first collaboration set. The first network element may determine based on the two pieces of gradient information, and when the two pieces of gradient information meet a specific condition, determine to join the first collaboration set to perform federated learning. The gradient information of the first collaboration set may alternatively include the information about each gradient corresponding to the first collaboration set. The first network element may determine based on the information about each gradient, and when a specific condition is met, determine to join the first collaboration set to perform federated learning. According to this embodiment of this application, the first network element may decide, based on the foregoing plurality types of possible gradient information of the first collaboration set, whether to join the first collaboration set to perform federated learning, to save a resource and improve the efficiency of the federated learning.

In a possible implementation, that the first network element determines, based on the first information, to join the first collaboration set includes:

The first network element obtains a data difference degree based on the first information, where the data difference degree indicates a difference between data in the first collaboration set and data in the first network element.

When the data difference degree is less than or equal to a first threshold, the first network element determines to join the first collaboration set.

In an implementation of this application, a possible specific implementation of determining to join the first collaboration set is provided. Specifically, the first network element obtains the data difference degree based on the first information, determines based on the data difference degree, and when the data difference degree meets a specific condition, determines to join the first collaboration set to perform federated learning. Because the data difference degree indicates the difference between the data in the first collaboration set and the data in the first network element, when the data difference degree is less than or equal to the first threshold, it indicates that the difference between the data in the first collaboration set and the data in the first network element is small, and the data in the first network element is suitable for performing federated learning. In this case, the first network element determines to join the first collaboration set. On the contrary, when the data difference degree is greater than the first threshold, it indicates that the difference between the data in the first collaboration set and the data in the first network element is large, and the data in the first network element is not suitable for performing federated learning. In this case, the first network element determines not to join the first collaboration set. According to this embodiment of this application, the first network element may determine, based on the difference between the data in the first collaboration set and the data in the first network element, whether to join the first collaboration set to perform federated learning. This can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency of the federated learning.

In a possible implementation, that the first network element obtains a data difference degree based on the first information includes:

The first network element obtains, based on information about a training model, gradient information corresponding to the first network element.

The first network element obtains the data difference degree based on the gradient information corresponding to the first network element, the sum of the norms of the gradients corresponding to the first collaboration set, and the sum of the gradients corresponding to the first collaboration set.

In an implementation of this application, a possible specific implementation of obtaining the data difference degree is provided. Specifically, the first network element obtains, based on the information about the training model, the gradient information corresponding to the first network element, and obtains the data difference degree through calculation based on the gradient information of the first network element and the gradient information of the first collaboration set. The gradient information of the first collaboration set may be specifically the sum of the norms of the gradients corresponding to the first collaboration set and the sum of the gradients corresponding to the first collaboration set. According to this embodiment of this application, the difference between the data in the first collaboration set and the data in the first network element can be accurately measured based on the gradient information of the first network element and the gradient information of the first collaboration set, to determine whether to join the first collaboration set.

In a possible implementation, that the first network element obtains a data difference degree based on the first information includes:

The first network element obtains, based on information about a training model, gradient information corresponding to the first network element.

The first network element obtains the data difference degree based on the gradient information corresponding to the first network element and the information about each gradient corresponding to the first collaboration set.

In an implementation of this application, a possible specific implementation of obtaining the data difference degree is provided. Specifically, the first network element obtains, based on the information about the training model, the gradient information corresponding to the first network element, and obtains the data difference degree through calculation based on the gradient information of the first network element and the gradient information of the first collaboration set. The gradient information of the first collaboration set may be specifically the information about each gradient corresponding to the first collaboration set. According to this embodiment of this application, the difference between the data in the first collaboration set and the data in the first network element can be accurately measured based on the gradient information of the first network element and the gradient information of the first collaboration set, to determine whether to join the first collaboration set.

In a possible implementation, the information about the training model is from the second network element; or the information about the training model is information preconfigured by the first network element.

In an implementation of this application, a possible specific implementation of the information about the training model is provided. Specifically, the information about the training model may be from the second network element, and may be information about a latest training model obtained through current federated training and aggregation. Alternatively, the information about the training model may be the information preconfigured by the first network element. According to this embodiment of this application, accurate gradient information of the first network element may be obtained based on the information about the training model.

In a possible implementation, the data difference degree includes:

$$
\text{DG\_local} = \frac{\varphi_1 + |\nabla\_local|^2}{|\varphi_2 + \nabla\_local|^2} \quad \text{or} \quad \text{DG\_local} = \frac{\sum_{j=1}^{N} |\nabla\_j|^2 + |\nabla\_local|^2}{\left|\sum_{j=1}^{N} \nabla\_j + \nabla\_local\right|^2}.
$$

DG_local is the data difference degree, $\varphi_1$ is the sum of the norms of the gradients corresponding to the first collaboration set, $\varphi_2$ is the sum of the gradients corresponding to the first collaboration set, $\nabla\_local$ is the gradient information corresponding to the first network element, $\nabla\_j$ is the information about each gradient corresponding to the first collaboration set, and N is a quantity of collaboration network elements included in the first collaboration set.

In an implementation of this application, two possible specific implementations of the data difference degree are provided. Specifically, the gradient information of the first collaboration set includes the sum of the norms of the gradients corresponding to the first collaboration set and the sum of the gradients corresponding to the first collaboration set, or the gradient information of the first collaboration set includes the information about each gradient corresponding to the first collaboration set. Based on different content included in the gradient information of the first collaboration set, formula methods that are for calculating the data difference degree and that correspond to the different content are provided respectively. According to this embodiment of this application, the data difference degree may be obtained through calculation based on the foregoing formulas and the gradient information of the first network element and the gradient information of the first collaboration set, so that the difference between the data in the first collaboration set and the data in the first network element can be accurately measured, to determine whether to join the first collaboration set.

In a possible implementation, the first threshold is carried in the first information; or the first threshold is a preconfigured value.

In an implementation of this application, a possible specific implementation of the first threshold is provided. Specifically, the first threshold may be delivered by the second network element to the first network element along with the first information, and the first threshold may alternatively be a value preconfigured by the first network element. According to this embodiment of this application, the first network element may select an appropriate first threshold, to measure the data difference degree, to determine whether to join the first collaboration set.

In a possible implementation, that a first network element receives first information from a second network element includes:

The first network element receives a broadcast message, where the broadcast message includes a message indicating the first information; or

the first network element sends a first request to the second network element, where the first request is used to request to obtain the first information; and

the first network element receives the first information sent by the second network element.

In an implementation of this application, several possible specific implementations of receiving the first information is provided. Specifically, the first network element receives the broadcast message sent by the second network element, where the broadcast message includes the message indicating the first information. The broadcast message may include the first information, or the broadcast message may include information such as an index and an identifier. The information such as the index and the identifier may indicate the first information. Alternatively, the first network element obtains the first information in a unicast manner, the first network element sends the first request to the second network element to request to obtain the first information, and the first network element receives the first information sent by the second network element. According to this embodiment of this application, the first network element may obtain the first information in a plurality of manners, to decide, based on the first information, whether to join the first collaboration set.

In a possible implementation, the method further includes:

The first network element sends a first message to the second network element, where the first message includes the gradient information corresponding to the first network element.

In an implementation of this application, a possible specific implementation of sending the first message is provided. Specifically, when the first network element determines to join the first collaboration set, the first network element sends the first message to the second network element. The first message includes the gradient information corresponding to the first network element, and is used to notify the second network element that the first network element determines to join the first collaboration set to perform federated learning.

In a possible implementation, the method further includes:

The first network element sends second information to the second network element, where the second information includes information for maintaining the first collaboration set.

In an implementation of this application, a possible specific implementation of sending the second information is provided. Specifically, when the first network element determines to join the first collaboration set, the first network element sends the second information to the second network element. The second information may be carried in the first message and sent to the second network element along with the first message. The second information may alternatively be carried in another message and sent to the second network element. The second information includes the information for maintaining the first collaboration set, and is used to assist the second network element in deciding whether to accept or not to accept the joining the first collaboration set by the first network element to perform federated learning. According to this embodiment of this application, when uploading the gradient information of the first network element, the first network element further uploads the second information used to assist the second network element in deciding whether to accept or not to accept the joining the first collaboration set by the first network element. The second network element decides, based on the second information, whether to accept the joining the first collaboration set by the first network element, so that a dynamic collaboration set can be further maintained, and the efficiency and accuracy of the federated learning can be improved. Specifically, this can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency and the accuracy of the federated learning.

In a possible implementation, the information for maintaining the first collaboration set includes at least one of the following:

a quantity of data samples of the first network element, duration occupied by the first network element to perform training based on the information about the training model, or data distribution information of the first network element.

In an implementation of this application, a possible specific implementation of the second information is provided. Specifically, the second information includes the information for maintaining the first collaboration set, and the information for maintaining the first collaboration set may specifically include the quantity of data samples of the first network element, the duration occupied by the first network element to perform training based on the information about the training model, the data distribution information of the first network element, or the like. According to this embodiment of this application, the second network element may decide, based on one or more of the data sample quantity, the duration occupied for the training, the data distribution information, or the like, whether to accept the joining the first collaboration set by the first network element, so that the dynamic collaboration set can be further maintained, and the efficiency and the accuracy of the federated learning can be improved.

In a possible implementation, the method further includes:

When the second network element does not accept joining the first collaboration set by the first network element, the first network element receives rejection information from the second network element.

In an implementation of this application, a possible specific implementation of receiving the rejection information is provided. Specifically, when the second network element does not accept the joining the first collaboration set by the first network element, the first network element receives the rejection information sent by the second network element, to notify the first network element that the second network element already rejects accepting the joining the first collaboration set by the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In an implementation of this application, a possible specific implementation of the rejection information is provided. Specifically, the rejection information includes at least one of the rejection reason and the improvement measure. The rejection reason includes the reason for rejecting the joining the first collaboration set by the first network element, and the improvement measure includes the measure for helping the first network element join the first collaboration set. For example, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch. For another example, the second network element learns, based on the second information, that time of transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate. For another example, the second network element learns, based on the second information, that the data in the first network element does not match the data in the first collaboration set, and the second network element rejects accepting the joining the first collaboration set by the first network element, and sends the rejection information to the first network element. The rejection reason included in the rejection information is that the data does not match. According to this embodiment of this application, the second network element may feed back the rejection information to the first network element, to optimize configuration information used by the first network element to perform federated learning, to improve efficiency and accuracy of subsequently performing federated learning by the first network element.

According to a second aspect, an embodiment of this application provides a federated learning method. The method includes:

A second network element obtains first information, where the first information includes gradient information of a first collaboration set corresponding to the second network element, and the first collaboration set includes a collaboration network element configured to perform federated learning.

The second network element sends the first information to a first network element, where the first information is used by the first network element to determine to join the first collaboration set.

In this embodiment of this application, the federated learning method is provided. The second network element obtains the first information, and sends the first information to the first network element. The first information includes the gradient information of the first collaboration set corresponding to the second network element, and the first collaboration set includes a collaboration network element currently used to perform federated learning. The gradient information of the first collaboration set is used by the first network element to determine. When the gradient information of the first collaboration set meets a specific condition, the first network element determines to join the first collaboration set to perform federated learning. When the gradient information of the first collaboration set does not meet the specific condition, the first network element determines not to join the first collaboration set. According to this embodiment of this application, the second network element may deliver the first information to the first network element, so that the first network element may decide, based on the gradient information of the first collaboration set included in the first information, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In an implementation of this application, a possible specific implementation of the gradient information of the first collaboration set is provided. Specifically, the gradient information of the first collaboration set may include the sum of the norms of the gradients corresponding to the first collaboration set and the sum of the gradients corresponding to the first collaboration set. The first network element may determine based on the two pieces of gradient information, and when the two pieces of gradient information meet a specific condition, determine to join the first collaboration set to perform federated learning. The gradient information of the first collaboration set may alternatively include the information about each gradient corresponding to the first collaboration set. The first network element may determine based on the information about each gradient, and when the specific condition is met, determine to join the first collaboration set to perform federated learning. According to this embodiment of this application, the second network element may deliver the first information to the first network element, so that the first network element may decide, based on the foregoing plurality types of possible gradient information of the first collaboration set, whether to join the first collaboration set to perform federated learning, to save a resource and improve the efficiency of the federated learning.

In a possible implementation, that the second network element sends the first information to a first network element includes:

The second network element sends a broadcast message, where the broadcast message includes a message indicating the first information; or
the second network element receives a first request sent by the first network element, where the first request is used to request to obtain the first information; and
the second network element sends the first information to the first network element.

In an implementation of this application, several possible specific implementations of sending the first information is provided. Specifically, the second network element sends the broadcast message, where the broadcast message includes the message indicating the first information. The broadcast message may include the first information, or the broadcast message may include information such as an index and an identifier. The information such as the index and the identifier may indicate the first information. Correspondingly, the first network element obtains the first information by receiving the broadcast message sent by the second network element. Alternatively, the second network element sends the first information in a unicast manner. The first network element sends the first request to the second network element to request to obtain the first information. After receiving the first request sent by the first network element, the second network element sends the first information to the first network element in response to the first request. Correspondingly, the first network element receives the first information sent by the second network element. According to this embodiment of this application, the second network element may send the first information in a plurality of manners, so that the first network element may decide, based on the first information, whether to join the first collaboration set.

In a possible implementation, the method further includes:

The second network element receives a first message sent by the first network element, where the first message includes gradient information corresponding to the first network element.

In an implementation of this application, a possible specific implementation of receiving the first message is provided. Specifically, when the first network element determines to join the first collaboration set, the first network element sends the first message to the second network element. Correspondingly, the second network element receives the first message sent by the first network element. The first message includes the gradient information corresponding to the first network element, and is used to notify the second network element that the first network element determines to join the first collaboration set to perform federated learning.

In a possible implementation, the method further includes:

The second network element receives second information sent by the first network element, where the second information includes information for maintaining the first collaboration set.

The second network element determines, based on the second information, whether to accept or not to accept joining the first collaboration set by the first network element.

In an implementation of this application, a possible specific implementation of determining whether to accept or not to accept the joining the first collaboration set by the first network element is provided. Specifically, when the first network element determines to join the first collaboration set, the first network element sends the second information to the second network element. The second information may be carried in the first message and sent to the second network element along with the first message. The second information may alternatively be carried in another message and sent to the second network element. Correspondingly, the second network element receives the second information sent by the first network element, the second information includes the information for maintaining the first collaboration set, and the second network element determines, based on the received second information, whether to accept or not to accept the joining the first collaboration set by the first network element to perform federated learning. According to this embodiment of this application, when uploading the gradient information of the first network element, the first network element further uploads the second information used to assist the second network element in deciding whether to accept or not to accept the joining the first collaboration set by the first network element. **In** this way, the second network element may decide, based on the second information, whether to accept the joining the first collaboration set by the first network element, so that a dynamic collaboration set can be further maintained, and the efficiency and accuracy of the federated learning can be improved. Specifically, this can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency and the accuracy of the federated learning.

In a possible implementation, the information for maintaining the first collaboration set includes at least one of the following:

a quantity of data samples of the first network element, duration occupied by the first network element to perform training based on information about a training model, or data distribution information of the first network element.

In an implementation of this application, a possible specific implementation of the second information is provided. Specifically, the second information includes the information for maintaining the first collaboration set, and the information for maintaining the first collaboration set may specifically include the quantity of data samples of the first network element, the duration occupied by the first network element to perform training based on the information about the training model, the data distribution information of the first network element, or the like. According to this embodiment of this application, the second network element may decide, based on one or more of the data sample quantity, the duration occupied for the training, the data distribution information, or the like, whether to accept the joining the first collaboration set by the first network element, so that the dynamic collaboration set can be further maintained, and the efficiency and the accuracy of the federated learning can be improved.

In a possible implementation, the method further includes:

When the second network element does not accept the joining the first collaboration set by the first network element, the second network element sends rejection information to the first network element.

In an implementation of this application, a possible specific implementation of sending the rejection information is provided. Specifically, when the second network element does not accept the joining the first collaboration set by the first network element, the second network element sends the rejection information to the first network element, to notify the first network element that the second network element already rejects accepting the joining the first collaboration set by the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In an implementation of this application, a possible specific implementation of the rejection information is provided. Specifically, the rejection information includes at least one of the rejection reason and the improvement measure. The rejection reason includes the reason for rejecting the joining the first collaboration set by the first network element, and the improvement measure includes the measure for helping the first network element join the first collaboration set. For example, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch. For another example, the second network element learns, based on the second information, that time of transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate. For another example, the second network element learns, based on the second information, that data in the first network element does not match data in the first collaboration set, and the second network element rejects accepting the joining the first collaboration set by the first network element, and sends the rejection information to the first network element. The rejection reason included in the rejection information is that the data does not match. According to this embodiment of this application, the second network element may feed back the rejection information to the first network element, to optimize configuration information used by the first network element to perform federated learning, to improve efficiency and accuracy of subsequently performing federated learning by the first network element.

According to a third aspect, an embodiment of this application provides a federated learning method. The method includes:

A first network element obtains second information, where the second information includes information for maintaining a first collaboration set corresponding to a second network element, and the first collaboration set includes a collaboration network element configured to perform federated learning.

The first network element sends the second information to the second network element.

In this embodiment of this application, the federated learning method is provided. The first network element obtains the second information, and sends the second information to the second network element. The second information includes the information for maintaining the first collaboration set corresponding to the second network element, the first collaboration set includes the collaboration network element configured to perform federated learning, and the second information is used to assist the second network element in deciding whether to accept or not to accept joining the first collaboration set by the first network element to perform federated learning. According to this embodiment of this application, the first network element may deliver the second information to the second network element, to assist the second network element in deciding whether to accept or not to accept the joining the first collaboration set by the first network element, and the second network element decides, based on the second information, whether to accept the joining the first collaboration set by the first network element, so that a dynamic collaboration set can be further maintained, and efficiency and accuracy of the federated learning can be improved. Specifically, this can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency and the accuracy of the federated learning.

In a possible implementation, the information for maintaining the first collaboration set corresponding to the second network element includes at least one of the following:

a quantity of data samples of the first network element, duration occupied by the first network element to perform training based on information about a training model, or data distribution information of the first network element.

In an implementation of this application, a possible specific implementation of the second information is provided. Specifically, the second information includes the information for maintaining the first collaboration set, and the information for maintaining the first collaboration set may specifically include the quantity of data samples of the first network element, the duration occupied by the first network element to perform training based on the information about the training model, the data distribution information of the first network element, or the like. According to this embodiment of this application, the second network element may decide, based on one or more of the data sample quantity, the duration occupied for the training, the data distribution information, or the like, whether to accept the joining the first collaboration set by the first network element, so that the dynamic collaboration set can be further maintained, and the efficiency and the accuracy of the federated learning can be improved.

In a possible implementation, the method further includes:

When the second network element does not accept the joining the first collaboration set by the first network element, the first network element receives rejection information from the second network element.

In an implementation of this application, a possible specific implementation of receiving the rejection information is provided. Specifically, when the second network element does not accept the joining the first collaboration set by the first network element, the first network element receives the rejection information sent by the second network element, to notify the first network element that the second network element already rejects accepting the joining the first collaboration set by the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In an implementation of this application, a possible specific implementation of the rejection information is provided. Specifically, the rejection information includes at least one of the rejection reason and the improvement measure. The rejection reason includes the reason for rejecting the joining the first collaboration set by the first network element, and the improvement measure includes the measure for helping the first network element join the first collaboration set. For example, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch. For another example, the second network element learns, based on the second information, that time of transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate. For another example, the second network element learns, based on the second information, that data in the first network element does not match data in the first collaboration set, and the second network element rejects accepting the joining the first collaboration set by the first network element, and sends the rejection information to the first network element. The rejection reason included in the rejection information is that the data does not match. According to this embodiment of this application, the second network element may feed back the rejection information to the first network element, to optimize configuration information used by the first network element to perform federated learning, to improve efficiency and accuracy of subsequently performing federated learning by the first network element.

According to a fourth aspect, an embodiment of this application provides a federated learning method. The method includes:

A second network element receives second information sent by a first network element, where the second information includes information for maintaining a first collaboration set corresponding to the second network element, and the first collaboration set includes a collaboration network element configured to perform federated learning.

The second network element determines, based on the second information, whether to accept or not to accept joining the first collaboration set by the first network element.

In this embodiment of this application, the federated learning method is provided. The second network element receives the second information sent by the first network element, and determines, based on the second information, whether to accept or not to accept the joining the first collaboration set by the first network element. The second information includes the information for maintaining the first collaboration set corresponding to the second network element, and the first collaboration set includes the collaboration network element configured to perform federated learning. According to this embodiment of this application, the first network element delivers the second information to the second network element, to assist the second network element in deciding whether to accept or not to accept the joining the first collaboration set by the first network element, and the second network element decides, based on the second information, whether to accept the joining the first collaboration set by the first network element, so that a dynamic collaboration set can be further maintained, and efficiency and accuracy of the federated learning can be improved. Specifically, this can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency and the accuracy of the federated learning.

In a possible implementation, the information for maintaining the first collaboration set corresponding to the second network element includes at least one of the following:

a quantity of data samples of the first network element, duration occupied by the first network element to perform training based on information about a training model, or data distribution information of the first network element.

In an implementation of this application, a possible specific implementation of the second information is provided. Specifically, the second information includes the information for maintaining the first collaboration set, and the information for maintaining the first collaboration set may specifically include the quantity of data samples of the first network element, the duration occupied by the first network element to perform training based on the information about the training model, the data distribution information of the first network element, or the like. According to this embodiment of this application, the second network element may decide, based on one or more of the data sample quantity, the duration occupied for the training, the data distribution information, or the like, whether to accept the joining the first collaboration set by the first network element, so that the dynamic collaboration set can be further maintained, and the efficiency and the accuracy of the federated learning can be improved.

In a possible implementation, the method further includes:

When the second network element does not accept the joining the first collaboration set by the first network element, the second network element sends rejection information to the first network element.

In an implementation of this application, a possible specific implementation of sending the rejection information is provided. Specifically, when the second network element does not accept the joining the first collaboration set by the first network element, the second network element sends the rejection information to the first network element, to notify the first network element that the second network element already rejects accepting the joining the first collaboration set by the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In an implementation of this application, a possible specific implementation of the rejection information is provided. Specifically, the rejection information includes at least one of the rejection reason and the improvement measure. The rejection reason includes the reason for rejecting the joining the first collaboration set by the first network element, and the improvement measure includes the measure for helping the first network element join the first collaboration set. For example, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch. For another example, the second network element learns, based on the second information, that time of transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate. For another example, the second network element learns, based on the second information, that data in the first network element does not match data in the first collaboration set, and the second network element rejects accepting the joining the first collaboration set by the first network element, and sends the rejection information to the first network element. The rejection reason included in the rejection information is that the data does not match. According to this embodiment of this application, the second network element may feed back the rejection information to the first network element, to optimize configuration information used by the first network element to perform federated learning, to improve efficiency and accuracy of subsequently performing federated learning by the first network element.

According to a fifth aspect, an embodiment of this application provides a communication apparatus. The apparatus includes a module or unit configured to perform the method according to any one of the first aspect to the fourth aspect

In a possible design, the apparatus includes:

a transceiver unit, configured to receive first information from a second network element, where the first information includes gradient information of a first collaboration set corresponding to the second network element, and the first collaboration set includes a collaboration network element configured to perform federated learning; and

a processing unit, configured to determine, based on the first information, to join the first collaboration set.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In a possible implementation, the processing unit is specifically configured to obtain a data difference degree based on the first information, where the data difference degree indicates a difference between data in the first collaboration set and data in the communication apparatus.

The processing unit is further specifically configured to: when the data difference degree is less than or equal to a first threshold, determine to join the first collaboration set.

In a possible implementation, the processing unit is specifically configured to obtain, based on information about a training model, gradient information corresponding to the communication apparatus.

The processing unit is further specifically configured to obtain the data difference degree based on the gradient information corresponding to the communication apparatus, the sum of the norms of the gradients corresponding to the first collaboration set, and the sum of the gradients corresponding to the first collaboration set.

In a possible implementation, the processing unit is specifically configured to obtain, based on the information about the training model, the gradient information corresponding to the communication apparatus.

The processing unit is further specifically configured to obtain the data difference degree based on the gradient information corresponding to the communication apparatus and the information about each gradient corresponding to the first collaboration set.

In a possible implementation, the information about the training model is from the second network element; or the information about the training model is information preconfigured by the communication apparatus.

In a possible implementation, the data difference degree includes:

$$\text{DG\_local} = \frac{\varphi_1 + |\nabla\_local|^2}{|\varphi_2 + \nabla\_local|^2} \ \text{ or } \ \text{DG\_local} = \frac{\sum_{j=1}^{N}|\nabla\_j|^2 + |\nabla\_local|^2}{\left|\sum_{j=1}^{N}\nabla\_j + \nabla\_local\right|^2}.$$

DG_local is the data difference degree, $\varphi_1$ is the sum of the norms of the gradients corresponding to the first collaboration set, $\varphi_2$ is the sum of the gradients corresponding to the first collaboration set, $\nabla\_local$ is the gradient information corresponding to the communication apparatus, $\nabla\_j$ is the information about each gradient corresponding to the first collaboration set, and N is a quantity of collaboration network elements included in the first collaboration set.

In a possible implementation, the first threshold is carried in the first information; or the first threshold is a preconfigured value.

In a possible implementation, the transceiver unit is specifically configured to receive a broadcast message, where the broadcast message includes a message indicating the first information; or

the transceiver unit is further configured to send a first request to the second network element, where the first request is used to request to obtain the first information; and

the transceiver unit is configured to receive the first information sent by the second network element.

In a possible implementation, the transceiver unit is further configured to send a first message to the second network element, where the first message includes the gradient information corresponding to the communication apparatus.

In a possible implementation, the transceiver unit is further configured to send second information to the second network element, where the second information includes information for maintaining the first collaboration set.

In a possible implementation, the information for maintaining the first collaboration set includes at least one of the following:

a quantity of data samples of the communication apparatus, duration occupied by the communication apparatus to perform training based on the information about the training model, or data distribution information of the communication apparatus.

In a possible implementation, the transceiver unit is further configured to: when the second network element does not accept joining the first collaboration set by the communication apparatus, receive rejection information from the second network element.

In a possible implementation, the rejection information includes at least one of a rejection reason and an improvement measure. The rejection reason includes a reason for rejecting the joining the first collaboration set by the communication apparatus, and the improvement measure includes a measure for helping the communication apparatus join the first collaboration set.

For technical effect brought by the fifth aspect or any possible implementation, refer to descriptions of the technical effect corresponding to the first aspect or the corresponding implementations.

In another possible design, the apparatus includes:

a processing unit, configured to obtain first information, where the first information includes gradient information of a first collaboration set corresponding to the communication apparatus, and the first collaboration set includes a collaboration network element configured to perform federated learning; and
a transceiver unit, configured to send the first information to a first network element, where the first information is used by the first network element to determine to join the first collaboration set.

In a possible implementation, the gradient information of the first collaboration set includes at least one of the following:
a sum of norms of gradients corresponding to the first collaboration set and a sum of the gradients corresponding to the first collaboration set; or information about each gradient corresponding to the first collaboration set.

In a possible implementation, the transceiver unit is specifically configured to send a broadcast message, where the broadcast message includes a message indicating the first information; or

the transceiver unit is further configured to receive a first request sent by the first network element, where the first request is used to request to obtain the first information; and
the transceiver unit is configured to send the first information to the first network element.

In a possible implementation, the transceiver unit is further configured to receive a first message sent by the first network element, where the first message includes gradient information corresponding to the first network element.

In a possible implementation, the transceiver unit is further configured to receive second information sent by the first network element, where the second information includes information for maintaining the first collaboration set.

The processing unit is further configured to determine, based on the second information, whether to accept or not to accept joining the first collaboration set by the first network element.

In a possible implementation, the information for maintaining the first collaboration set includes at least one of the following:
a quantity of data samples of the first network element, duration occupied by the first network element to perform training based on information about a training model, or data distribution information of the first network element.

In a possible implementation, the transceiver unit is further configured to: when the communication apparatus does not accept the joining the first collaboration set by the first network element, send rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

For technical effect brought by the fifth aspect or any possible implementation, refer to descriptions of the technical effect corresponding to the second aspect or the corresponding implementations.

In another possible design, the apparatus includes:

a processing unit, configured to obtain second information, where the second information includes information for maintaining a first collaboration set corresponding to a second network element, and the first collaboration set includes a collaboration network element configured to perform federated learning; and
a transceiver unit, configured to send the second information to the second network element.

In a possible implementation, the information for maintaining the first collaboration set corresponding to the second network element includes at least one of the following:
a quantity of data samples of the communication apparatus, duration occupied by the communication apparatus to perform training based on information about a training model, or data distribution information of the communication apparatus.

In a possible implementation, the transceiver unit is further configured to: when the second network element does not accept joining the first collaboration set by the communication apparatus, receive rejection information from the second network element.

In a possible implementation, the rejection information includes at least one of a rejection reason and an improvement measure. The rejection reason includes a reason for rejecting the joining the first collaboration set by the communication apparatus, and the improvement measure includes a measure for helping the communication apparatus join the first collaboration set.

For technical effect brought by the fifth aspect or any possible implementation, refer to descriptions of the technical effect corresponding to the third aspect or the corresponding implementations.

In another possible design, the apparatus includes:

a transceiver unit, configured to receive second information sent by a first network element, where the second information includes information for maintaining a first collaboration set corresponding to the communication apparatus, and the first collaboration set includes a collaboration network element configured to perform federated learning; and
a processing unit, configured to determine, based on the second information, whether to accept or not to accept joining the first collaboration set by the first network element.

In a possible implementation, the information for maintaining the first collaboration set corresponding to the communication apparatus includes at least one of the following:
a quantity of data samples of the first network element, duration occupied by the first network element to perform training based on information about a training model, or data distribution information of the first network element.

In a possible implementation, the transceiver unit is further configured to: when the communication apparatus does not accept the joining the first collaboration set by the first network element, send rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

For technical effect brought by the fifth aspect or any possible implementation, refer to descriptions of the technical effect corresponding to the fourth aspect or the corresponding implementations.

According to a sixth aspect, an embodiment of this application provides a communication apparatus. The communication apparatus includes a processor. The processor is coupled to a memory, and may be configured to execute instructions in the memory, to implement the method according to any one of the first aspect to the fourth aspect and any one of the possible implementations. Optionally, the communication apparatus further includes the memory. Optionally, the communication apparatus further includes a communication interface, and the processor is coupled to the communication interface.

According to a seventh aspect, an embodiment of this application provides a communication apparatus, including a logic circuit and a communication interface. The communication interface is configured to: receive information or send information. The logic circuit is configured to: receive information or send information through the communication interface, so that the communication apparatus performs the method according to any one of the first aspect to the fourth aspect and any one of the possible implementations.

According to an eighth aspect, an embodiment of this application provides a computer-readable storage medium. The computer-readable storage medium is configured to store a computer program (which may also be referred to as code or instructions). When the computer program is run on a computer, the method according to any one of the first aspect to the fourth aspect and any one of the possible implementations is implemented.

According to a ninth aspect, an embodiment of this application provides a computer program product. The computer program product includes a computer program (which may also be referred to as code or instructions). When the computer program is run, the computer is enabled to perform the method according to any one of the first aspect to the fourth aspect and any one of the possible implementations.

According to a tenth aspect, an embodiment of this application provides a chip. The chip includes a processor, and the processor is configured to execute instructions. When the processor executes the instructions, the chip is enabled to perform the method according to any one of the first aspect to the fourth aspect and any one of the possible implementations. Optionally, the chip further includes a communication interface, and the communication interface is configured to: receive a signal or send a signal.

According to an eleventh aspect, an embodiment of this application provides a communication system. The communication system includes at least one of the following: the communication apparatus according to the fifth aspect, the communication apparatus according to the sixth aspect, or the communication apparatus according to the seventh aspect.

According to a twelfth aspect, an embodiment of this application provides a communication system. The communication system includes a first network element and a second network element, the first network element is configured to perform the method according to any one of the first aspect or the third aspect and the possible implementations, and the second network element is configured to perform the method according to any one of the second aspect or the fourth aspect and the possible implementations.

In addition, in a process of performing the method according to any one of the first aspect to the fourth aspect and any one of the possible implementations, a process related to sending information, receiving information, and/or the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the fourth aspect and any one of the possible implementations, the processor may be a processor specially configured to perform the method, or may be a processor that performs the method by executing computer instructions in a memory, for example, a general-purpose processor. The foregoing memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside an apparatus.

In another possible implementation, the at least one memory is located in an apparatus.

In another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In this embodiment of this application, the first network element may decide, based on gradient information that is of a first collaboration set and that is delivered by the second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

## BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.

FIG. 1 is a diagram of a communication system according to an embodiment of this application;
FIG. 2 is a schematic flowchart of a federated learning method according to an embodiment of this application;
FIG. 3 is a schematic flowchart of another federated learning method according to an embodiment of this application;
FIG. 4 is a schematic flowchart of still another federated learning method according to an embodiment of this application;
FIG. 5 is a schematic flowchart of still another federated learning method according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a chip according to an embodiment of this application.

## DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in the specification means that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th-generation, 5G) communication system, and a new communication system (for example, 6G) emerging in future communication development.

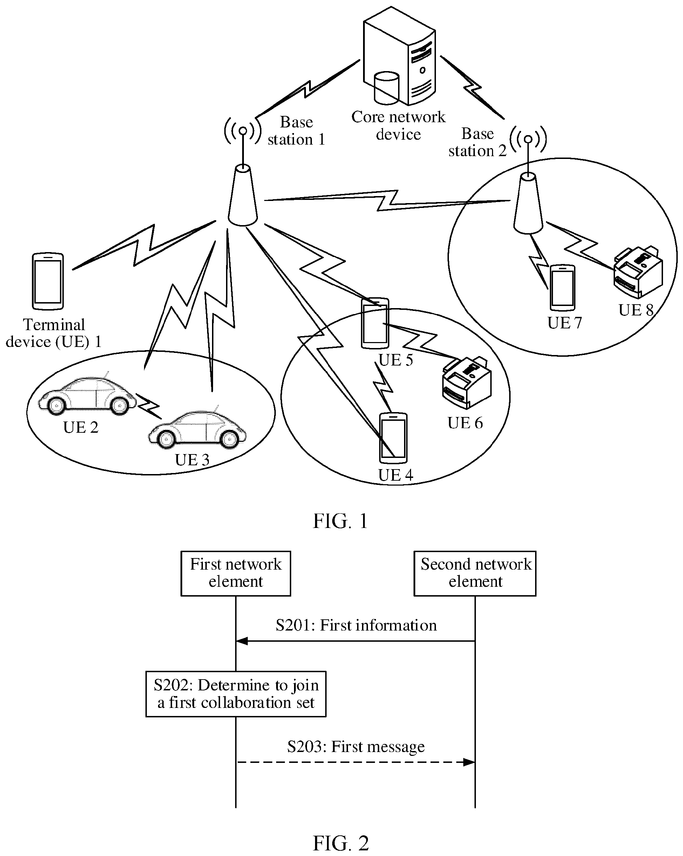

The technical solutions provided in this application may be further applied to machine type communication (machine type communication, MTC), a long term evolution-machine (long term evolution-machine, LTE-M) technology, and a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X can stand for anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. For example, in FIG. 1 shown below, terminal devices may communicate with each other by using the D2D technology, the M2M technology, the V2X technology, or the like.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next-generation NodeB (next-generation NodeB, gNB), a next-generation evolved NodeB (next-generation evolved NodeB, ng-eNB), or an access network device in future 6G communication. The access network device may be any device having a wireless transceiver function and includes but is not limited to the base station shown above. The base station may alternatively be a base station in a future communication system such as a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may be a small cell, a transmission reception point (transmission reception point, TRP) (which may also be referred to as a transmission point), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU, so that costs can be reduced, and network expansion can be prone to implement. In some other deployments of the base station, the CU may be further divided into a CU-control plane (control plane, CP), a CU-user plane (user plane, UP), and the like. In still some other deployments of the base station, the base station may alternatively be an open radio access network (open radio access network, ORAN) architecture or the like. A specific type of the base station is not limited in this application.

For ease of description, the following describes the method in this application by using an example in which the access network device is a base station.

For example, the terminal device may also be referred to as a user equipment (user equipment, UE) or a terminal. The terminal device is a device having a wireless transceiver function. The terminal device may be deployed on land, and includes an indoor device, an outdoor device, a handheld device, a wearable device, or a vehicle-mounted device. The terminal device may alternatively be deployed on the water, for example, on a ship. The terminal device may alternatively be deployed in the air, for example, deployed on an airplane, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home, or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in the internet of vehicles, but also include a vehicle-mounted device, an in-vehicle terminal, or the like in the internet of vehicles. A specific form of the terminal device when the terminal device is used in the internet of vehicles is not limited in this application.

For ease of description, the following describes the method in this application by using an example in which the terminal device is a UE.

As shown in FIG. 1, the communication system may further include at least one core network device. The core network device is described as follows.

For example, the core network device includes services such as user access control, mobility management, session management, user security authentication, and charging. The core network device includes a plurality of functional units, and may be divided into a control plane function entity and a data plane function entity. An access and mobility management unit (access and mobility management function, AMF) is responsible for user access management, security authentication, and mobility management. A location management unit (location management function, LMF) is responsible for managing and controlling a location service request of a target terminal, and processing location related information. A user plane unit (user plane function, UPF) is responsible for managing functions such as user plane data transmission and traffic statistics collection.

The communication system shown in FIG. 1 includes one core network device, two base stations, and eight UEs, for example, the core network device, a base station 1, a base station 2, and a UE 1 to a UE 8 in FIG. 1. In the communication system, the base station 1 may send a downlink signal likes configuration information or downlink control information (downlink control information, DCI) to the UE 1 to the UE 6, and the UE 1 to the UE 6 may send an uplink signal like an SRS or a physical uplink shared channel (physical uplink shared channel, PUSCH) to the base station 1. The base station 1 may further send the downlink signal to the UE 7 and the UE 8 via the base station 2, and the UE 7 and the UE 8 may send an uplink signal to the base station 1 via the base station 2. The base station 2 may send the downlink signal like the configuration information or the DCI to the UE 7 and the UE 8, and the UE 7 and the UE 8 may send the uplink signal like the SRS or the PUSCH to the base station 2. It may be understood that, for a manner of communication between the UEs, refer to the foregoing descriptions. Details are not described herein again.

It should be understood that FIG. 1 shows an example of one core network device, two base stations, eight UEs, and communication links between communication devices. Optionally, the communication system may include a plurality of base stations, and a coverage area of each base station may include another quantity of UEs, for example, more or fewer UEs. This is not limited in this application.

A plurality of antennas may be configured for the foregoing communication devices, such as the core network device, the base station 1, the base station 2, and the UE 1 to the UE 8 in FIG. 1. The plurality of antennas may include at least one transmit antenna configured to send a signal, at least one receive antenna configured to receive a signal, and the like. A specific structure of each communication device is not limited in embodiments of this application. Optionally, the communication system may further include another network entity like a network controller or a mobility management entity. This is not limited in embodiments of this application.

It may be understood that a diagram of a communication system shown in FIG. 1 is merely an example. For a diagram of a communication system in another form, refer to a related standard, protocol, or the like. Details are not described one by one herein again.

The embodiments shown in the following are applicable to the communication system shown in FIG. 1, or are applicable to a communication system in another form. This is not described in detail again in the following.

This application provides a federated learning method, and is applied to the field of communication technologies. Before the method in this application is described in detail, to describe a solution in this application more clearly, the following first describes some knowledge related to federated learning.

Federated learning: The federated learning is a distributed machine learning framework in essence, and implements data sharing and co-modeling based on data privacy security and legal compliance. A core idea of the federated learning is that when a plurality of data sources participate in model training, original data does not need to be transferred, only an intermediate parameter of an interactive model is used for model joint training, and the original data can be retained locally. In this manner, balance between data privacy protection and data sharing and analysis, that is, a data application mode of "available and invisible data", is achieved.

Federated learning in the field of artificial intelligence technologies usually improves accuracy and generalization of a training model by aggregating models on a plurality of client network elements, to expand data sets applicable to training. However, in a current federated learning process, a wireless network environment dynamically changes constantly, and uncertainty is high. Both a network element movement handover and a busy/idle-hour change of a network element service cause an unstable collaboration set used to perform federated learning. Due to instability of the collaboration set and limited bandwidth and computing resources of a wireless network, data sets of some network elements are not suitable for being aggregated but participate in aggregation, consequently causing a problem of resource waste, and further reducing efficiency of the federated learning.

For technical problems of resource waste and low federated learning efficiency in the foregoing federated learning process, in this embodiment of this application, a federated learning method is provided. A first network element may decide, based on gradient information that is of a first collaboration set and that is delivered by a second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency of the federated learning.

It should be understood that a network element (network element, NE) mentioned in this application, for example, the first network element and the second network element, may be simply understood as an element in a network, and is a minimum unit that can be monitored and managed in network management. A network element may include one or more chassis or subracks, and may be a set that can independently complete a specific transmission function. This is not described in detail again in the following.

FIG. 2 is a schematic flowchart of a federated learning method according to an embodiment of this application. The federated learning method is applied to the field of communication technologies. The federated learning method includes but is not limited to the following steps.

S201: A second network element sends first information to a first network element, and correspondingly, the first network element receives the first information sent by the second network element.

The first information includes gradient information of a first collaboration set corresponding to the second network element, and the first collaboration set includes a collaboration network element currently used to perform federated learning. The first network element may determine based on the gradient information of the first collaboration set. When the gradient information of the first collaboration set meets a specific condition, the first network element determines to join the first collaboration set to perform federated learning. When the gradient information of the first collaboration set does not meet the specific condition, the first network element determines not to join the first collaboration set.

It may be understood that the first network element in this embodiment of this application is a device equipped with a processor that can be configured to execute computer-executable instructions, and may be a terminal device, for example, a handheld terminal (a mobile phone, a tablet computer, or the like), or an in-vehicle terminal (a wireless terminal in self-driving, or the like). Specifically, the first network element may alternatively be the terminal device (including but not limited to any device of the UE 1 to the UE 8) in FIG. 1, and is configured to perform the federated learning method in this embodiment of this application, to save a resource and improve efficiency of the federated learning.

It may be understood that the second network element in this embodiment of this application is the device equipped with the processor that can be configured to execute the computer-executable instructions, and may be an access network device like a base station or a transmission point TRP, or may be a server. Specifically, the second network element may be the access network device (including but not limited to any device of the base station 1 and the base station 2) in FIG. 1, and is configured to perform the federated learning method in this embodiment of this application, to save the resource and improve the efficiency of the federated learning.

In a possible embodiment, the gradient information of the first collaboration set includes at least one of the following:

a sum of norms of gradients corresponding to the first collaboration set and a sum of the gradients corresponding to the first collaboration set; or information about each gradient corresponding to the first collaboration set.

Correspondingly, the first network element may determine based on the sum of the norms of the gradients corresponding to the first collaboration set and the sum of the gradients corresponding to the first collaboration set, or may determine based on the information about each gradient. When a preset condition is met, the first network element determines to join the first collaboration set to perform federated learning. On the contrary, when the preset condition is not met, the first network element determines not to join the first collaboration set.

According to this embodiment of this application, the first network element may decide, based on the foregoing plurality types of possible gradient information of the first collaboration set, whether to join the first collaboration set to perform federated learning, to save the resource and improve the efficiency of the federated learning.

In a possible embodiment, that the first network element receives the first information from the second network element may be specifically implemented in the following several manners.

Manner 1: The first network element receives a broadcast message sent by the second network element, where the broadcast message includes a message indicating the first information. The broadcast message may include the first information, or the broadcast message may include information such as an index and an identifier. The information such as the index and the identifier may indicate the first information. The first network element receives the first information from the second network element by receiving the broadcast message sent by the second network element.

Manner 2: The first network element sends a first request to the second network element to request to obtain the first information, and the second network element sends the first information to the first network element in response to the first request. Correspondingly, the first network element receives the first information sent by the second network element. The first network element receives the first information from the second network element in a unicast manner.

It may be understood that a method for receiving the first information from the second network element in Manner 1 and Manner 2 is merely used as an example of two methods for obtaining the first information by the first network element, and should not constitute a limitation on this embodiment of this application. Alternatively, the first information may be obtained through other information exchange that is properly transformed. This is not limited in this embodiment of this application.

According to this embodiment of this application, the first network element may obtain the first information in a plurality of manners, to decide, based on the first information, whether to join the first collaboration set.

In a possible embodiment, before step S201, the first network element further sends the first request to the second network element. In a different scenario, content of the first request is specifically as follows.

**Scenario 1:** The first network element does not belong to a collaboration network element in the first collaboration set.

In this scenario, the first network element sends the first request to the second network element to request to obtain the first information, and decides based on the obtained first information to determine whether to join the first collaboration set to perform federated learning. It may be understood that, in this case, the gradient information of the first collaboration set in the first information does not include gradient information of the first network element.

**Scenario 2:** The first network element belongs to a collaboration network element in the first collaboration set.

In this scenario, the first network element sends the first request to the second network element to request to obtain the first information, and decides based on the obtained first information to determine whether to continue to participate in federated learning performed by the first collaboration set. It may be understood that, in this case, the gradient information of the first collaboration set in the first information includes gradient information of the first network element.

S202: The first network element determines to join the first collaboration set.

The first network element determines, based on the first information, to join the first collaboration set.

Specifically, the first network element determines based on the gradient information of the first collaboration set included in the first information. When the gradient information of the first collaboration set meets the preset condition, the first network element determines to join the first collaboration set to perform federated learning. On the contrary, when the gradient information of the first collaboration set does not meet the preset condition, the first network element determines not to join the first collaboration set.

In a possible embodiment, a method for determining, based on the first information, to join the first collaboration set is provided. Details are as follows.

The first network element obtains a data difference degree based on the first information, determines based on the data difference degree, and when the data difference degree meets a specific condition, determines to join the first collaboration set to perform federated learning.

For example, when the data difference degree is less than or equal to a first threshold, the first network element determines to join the first collaboration set; or when the data difference degree is greater than the first threshold, the first network element determines not to join the first collaboration set.

It may be understood that, because the data difference degree indicates a difference between data in the first collaboration set and data in the first network element, when the data difference degree is less than or equal to the first threshold, it indicates that the difference between the data in the first collaboration set and the data in the first network element is small, and the data in the first network element is suitable for performing federated learning. In this case, the first network element determines to join the first collaboration set. On the contrary, when the data difference degree is greater than the first threshold, it indicates that the difference between the data in the first collaboration set and the data in the first network element is large, and the data in the first network element is not suitable for performing federated learning. In this case, the first network element determines not to join the first collaboration set.

It may be understood that, the foregoing deciding, by comparing the data difference degree with the first threshold, whether to join the first collaboration set is merely an example of a method for determining, based on the data difference degree, whether to join the first collaboration set, and should not constitute a limitation on this embodiment of this application.

Optionally, it may alternatively be: When the data difference degree is less than the first threshold, the first network element determines to join the first collaboration set; or when the data difference degree is greater than or equal to the first threshold, the first network element determines not to join the first collaboration set. Alternatively, whether to join the first collaboration set may be determined by using another method that is for magnitude comparison and that is properly transformed. This is not limited in this embodiment of this application.

Optionally, the first threshold may be delivered by the second network element to the first network element along with the first information, and the first threshold may alternatively be a value preconfigured by the first network element. According to this embodiment of this application, the first network element may select an appropriate first threshold, to measure the data difference degree, to determine whether to join the first collaboration set.

According to this embodiment of this application, the first network element may determine, based on the difference between the data in the first collaboration set and the data in the first network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency of the federated learning.

It may be understood that, based on different content of the gradient information of the first collaboration set included in the first information, the data difference degree may be obtained by using corresponding different methods, to determine whether to join the first collaboration set.

In a possible embodiment, when the gradient information of the first collaboration set includes the sum of the norms of the gradients corresponding to the first collaboration set and the sum of the gradients corresponding to the first collaboration set, a corresponding method for obtaining the data difference degree is as follows.

The first network element obtains, based on information about a training model, the gradient information corresponding to the first network element, and obtains the data difference degree through calculation based on the gradient information of the first network element and the gradient information of the first collaboration set.

The gradient information of the first collaboration set may be specifically the sum of the norms of the gradients corresponding to the first collaboration set and the sum of the gradients corresponding to the first collaboration set.

Optionally, the information about the training model may be from the second network element, and may be information about a latest training model obtained through current federated training and aggregation. Alternatively, the information about the training model may be information preconfigured by the first network element. According to this embodiment of this application, accurate gradient information of the first network element may be obtained based on the information about the training model.

According to this embodiment of this application, the difference between the data in the first collaboration set and the data in the first network element can be accurately measured based on the gradient information of the first network element and the gradient information of the first collaboration set, to determine whether to join the first collaboration set.

Optionally, the foregoing method for obtaining the data difference degree may be further implemented by using the following formula:

$$\mathrm{DG\_local} = \frac{\varphi_1 + |\nabla\_local|^2}{|\varphi_2 + \nabla\_local|^2}$$

DG_local is the data difference degree, $\varphi_1$ is the sum of the norms of the gradients corresponding to the first collaboration set, $\varphi_2$ is the sum of the gradients corresponding to the first collaboration set, and $\nabla\_local$ is the gradient information corresponding to the first network element.

It may be understood that the method for obtaining the data difference degree by using the foregoing formula is merely an example of a method for obtaining the data difference degree based on the gradient information of the first collaboration set, and should not constitute a limitation on this embodiment of this application. Alternatively, the data difference degree may be obtained by using another formula that is properly transformed. This is not limited in this embodiment of this application.

According to this embodiment of this application, the data difference degree may be obtained through calculation based on the foregoing formula and the gradient information of the first network element and the gradient information of the first collaboration set, so that the difference between the data in the first collaboration set and the data in the first network element can be accurately measured, to determine whether to join the first collaboration set.

In a possible embodiment, when the gradient information of the first collaboration set includes the information about each gradient corresponding to the first collaboration set, a corresponding method for obtaining the data difference degree is as follows.

The first network element obtains, based on the information about the training model, the gradient information corresponding to the first network element, and obtains the data difference degree through calculation based on the gradient information of the first network element and the gradient information of the first collaboration set.

The gradient information of the first collaboration set may be specifically the information about each gradient corresponding to the first collaboration set.

Optionally, the information about the training model may be from the second network element, and may be the information about the latest training model obtained through current federated training and aggregation. Alternatively, the information about the training model may be the information preconfigured by the first network element. According to this embodiment of this application, the accurate gradient information of the first network element may be obtained based on the information about the training model.

According to this embodiment of this application, the difference between the data in the first collaboration set and the data in the first network element can be accurately measured based on the gradient information of the first network element and the gradient information of the first collaboration set, to determine whether to join the first collaboration set.

Optionally, the foregoing method for obtaining the data difference degree may be further implemented by using the following formula:

$$\text{DG\_local} = \frac{\sum_{j=1}^{N} |\nabla\_j|^2 + |\nabla\_local|^2}{\left| \sum_{j=1}^{N} \nabla\_j + \nabla\_local \right|^2}$$

DG_local is the data difference degree, $\nabla\_local$ is the gradient information corresponding to the first network element, $\nabla\_j$ is the information about each gradient corresponding to the first collaboration set, and N is a quantity of collaboration network elements included in the first collaboration set.

It may be understood that the method for obtaining the data difference degree by using the foregoing formula is merely an example of a method for obtaining the data difference degree based on the gradient information of the first collaboration set, and should not constitute a limitation on this embodiment of this application. Alternatively, the data difference degree may be obtained by using another formula that is properly transformed. This is not limited in this embodiment of this application.

According to this embodiment of this application, the data difference degree may be obtained through calculation based on the foregoing formula and the gradient information of the first network element and the gradient information of the first collaboration set, so that the difference between the data in the first collaboration set and the data in the first network element can be accurately measured, to determine whether to join the first collaboration set.

S203: The first network element sends a first message to the second network element, and correspondingly, the second network element receives the first message sent by the first network element.

Based on the foregoing step S202, when the first network element determines to join the first collaboration set, the first network element sends the first message to the second network element, and correspondingly, the second network element receives the first message sent by the first network element.

The first message includes the gradient information corresponding to the first network element, and is used to notify the second network element that the first network element determines to join the first collaboration set to perform federated learning.

It should be understood that step S203 is an optional step, and is specifically represented as follows: When the first network element determines not to join the first collaboration set, step S203 may not be performed.

In this embodiment of this application, the first network element may decide, based on the gradient information that is of the first collaboration set and that is delivered by the second network element, whether to join the first collaboration set to perform federated learning. This can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency of the federated learning.

In a possible embodiment, after the foregoing step S203, the first network element further sends second information to the second network element.

Based on the foregoing step S202, when the first network element determines to join the first collaboration set, in addition to sending the first message to the second network element, the first network element further sends the second information to the second network element.

The second information includes information for maintaining the first collaboration set, and is used to assist the second network element in deciding whether to accept or not to accept joining the first collaboration set by the first network element to perform federated learning.

Optionally, the information for maintaining the first collaboration set may specifically include a quantity of data samples of the first network element, duration occupied by the first network element to perform training based on the information about the training model, data distribution information of the first network element, or the like. The second network element may decide, based on one or more of the data sample quantity, the duration occupied for the training, the data distribution information, or the like, whether to accept the joining the first collaboration set by the first network element, so that a dynamic collaboration set can be further maintained, and the efficiency and accuracy of the federated learning can be improved.

It may be understood that the second information may be carried in the first message and sent to the second network element along with the first message, or the second information may be carried in another message and sent to the second network element. This is not limited in this embodiment of this application.

According to this embodiment of this application, when uploading the gradient information of the first network element, the first network element further uploads the second information used to assist the second network element in deciding whether to accept or not to accept the joining the first collaboration set by the first network element. The second network element decides, based on the second information, whether to accept the joining the first collaboration set by the first network element, so that the dynamic collaboration set can be further maintained, and the efficiency and the accuracy of the federated learning can be improved. Specifically, this can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency and the accuracy of the federated learning.

In a possible embodiment, after receiving the second information sent by the first network element, the second network element determines, based on the second information, whether to accept or not to accept the joining the first collaboration set by the first network element to perform federated learning.

When the second information meets a condition for performing federated learning by the first collaboration set, the second network element determines to accept the joining the first collaboration set by the first network element to perform federated learning. On the contrary, when the second information does not meet the condition for performing federated learning by the first collaboration set, the second network element determines not to accept the joining the first collaboration set by the first network element to perform federated learning.

Optionally, when the second network element does not accept the joining the first collaboration set by the first network element, the second network element further sends rejection information to the first network element. Correspondingly, the first network element receives the rejection information sent by the second network element, to notify the first network element that the second network element already rejects accepting the joining the first collaboration set by the first network element.

The rejection information includes at least one of a rejection reason and an improvement measure. The rejection reason includes a reason for rejecting the joining the first collaboration set by the first network element, and the improvement measure includes a measure for helping the first network element join the first collaboration set.

For example, when the second information includes the duration occupied by the first network element to perform training based on the information about the training model, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch.

For example, when the second information includes time of transmission between the first network element and the second network element, the second network element learns, based on the second information, that the time of transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate.

For example, when the second information includes the data set of the first network element (for example, the data sample quantity or the data distribution information), the second network element learns, based on the second information, that the data in the first network element does not match the data in the first collaboration set, and the second network element rejects accepting the joining the first collaboration set by the first network element, and sends the rejection information to the first network element. The rejection reason included in the rejection information is that the data does not match.

According to this embodiment of this application, the second network element decides, based on the second information, whether to accept the joining the first collaboration set by the first network element, so that the dynamic collaboration set can be further maintained, and the efficiency and the accuracy of the federated learning can be improved. Specifically, this can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency and the accuracy of the federated learning. In addition, the second network element may further feed back the rejection information to the first network element, to optimize configuration information used by the first network element to perform federated learning, to improve efficiency and accuracy of subsequently performing federated learning by the first network element.

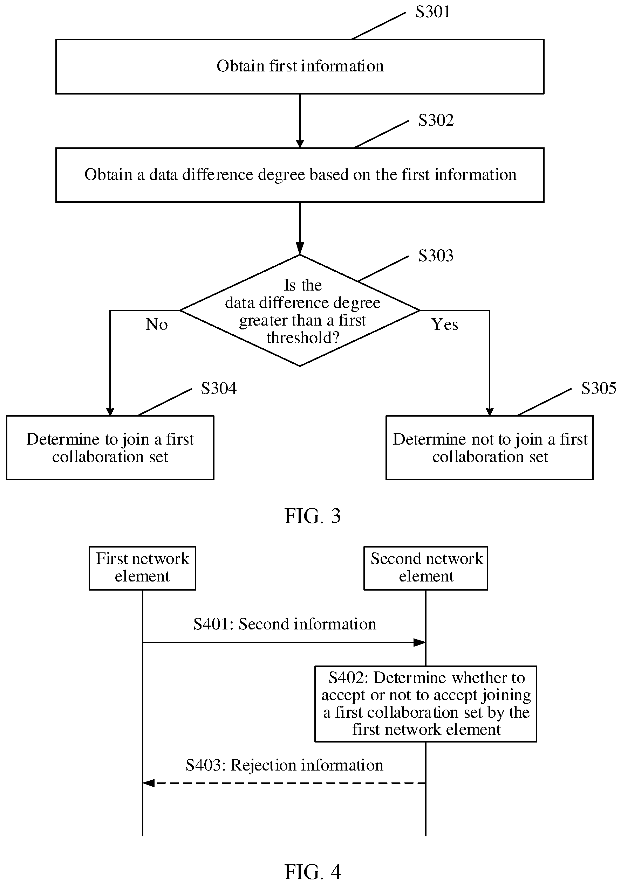

FIG. 3 is a schematic flowchart of another federated learning method according to an embodiment of this application. It may be understood that steps S302, S303, S304, and S305 in this embodiment of this application may be considered as proper variations or supplements to step S202 in FIG. 2. Alternatively, it may be understood that the federated learning method in this embodiment of this application may be considered as an embodiment that can be independently performed. This is not limited in this application. The federated learning method provided in this embodiment of this application is applied to the field of communication technologies. The federated learning method includes but is not limited to the following steps.

S301: Obtain first information.

A first network element obtains the first information.

This is consistent with step S201, and details are not described herein again.

S302: Obtain a data difference degree based on the first information.

The first network element obtains the data difference degree based on the first information, where the data difference degree indicates a difference between data in a first collaboration set and data in the first network element.

It may be understood that, because content of gradient information of the first collaboration set included in the first information is different, based on different content of the gradient information of the first collaboration set included in the first information, there are corresponding different methods for obtaining the data difference degree, to determine whether to join the first collaboration set.

Manner 1: When the gradient information of the first collaboration set includes a sum of norms of gradients corresponding to the first collaboration set and a sum of the gradients corresponding to the first collaboration set, a corresponding method for obtaining the data difference degree is as follows.

The first network element obtains, based on information about a training model, gradient information corresponding to the first network element, and obtains the data difference degree through calculation based on the gradient information of the first network element and the gradient information of the first collaboration set.

The gradient information of the first collaboration set may be specifically the sum of the norms of the gradients corresponding to the first collaboration set and the sum of the gradients corresponding to the first collaboration set.

Optionally, the information about the training model may be from the second network element, and may be information about a latest training model obtained through current federated training and aggregation. Alternatively, the information about the training model may be information preconfigured by the first network element. According to this embodiment of this application, accurate gradient information of the first network element may be obtained based on the information about the training model.

Optionally, the foregoing method for obtaining the data difference degree may be further implemented by using the following formula:

$$\text{DG\_local} = \frac{\varphi_1 + |\nabla\_local|^2}{|\varphi_2 + \nabla\_local|^2}$$

DG_local is the data difference degree, $\varphi_1$ is the sum of the norms of the gradients corresponding to the first collaboration set, $\varphi_2$ is the sum of the gradients corresponding to the first collaboration set, and $\nabla\_local$ is the gradient information corresponding to the first network element.

It may be understood that the method for obtaining the data difference degree by using the foregoing formula is merely an example of a method for obtaining the data difference degree based on the gradient information of the first collaboration set, and should not constitute a limitation on this embodiment of this application. Alternatively, the data difference degree may be obtained by using another formula that is properly transformed. This is not limited in this embodiment of this application.

In the foregoing manner 1, the difference between the data in the first collaboration set and the data in the first network element can be accurately measured based on the gradient information of the first network element and the gradient information of the first collaboration set, to determine whether to join the first collaboration set.

Manner 2: When the gradient information of the first collaboration set includes information about each gradient corresponding to the first collaboration set, a corresponding method for obtaining the data difference degree is as follows.

The first network element obtains, based on the information about the training model, the gradient information corresponding to the first network element, and obtains the data difference degree through calculation based on the gradient information of the first network element and the gradient information of the first collaboration set.

The gradient information of the first collaboration set may be specifically the information about each gradient corresponding to the first collaboration set.

Optionally, the information about the training model may be from the second network element, and may be the information about the latest training model obtained through the current federated training and aggregation. Alternatively, the information about the training model may be the information preconfigured by the first network element. According to this embodiment of this application, the accurate gradient information of the first network element may be obtained based on the information about the training model.

Optionally, the foregoing method for obtaining the data difference degree may be further implemented by using the following formula:

$$\mathrm{DG\_local} = \frac{\sum_{j=1}^{N} |\nabla\_j|^2 + |\nabla\_local|^2}{\left| \sum_{j=1}^{N} \nabla\_j + \nabla\_local \right|^2}$$

DG_local is the data difference degree, $\nabla\_local$ is the gradient information corresponding to the first network element, $\nabla\_j$ is the information about each gradient corresponding to the first collaboration set, and N is a quantity of collaboration network elements included in the first collaboration set.

It may be understood that the method for obtaining the data difference degree by using the foregoing formula is merely an example of a method for obtaining the data difference degree based on the gradient information of the first collaboration set, and should not constitute a limitation on this embodiment of this application. Alternatively, the data difference degree may be obtained by using another formula that is properly transformed. This is not limited in this embodiment of this application.

In the foregoing manner 2, the difference between the data in the first collaboration set and the data in the first network element can be accurately measured based on the gradient information of the first network element and the gradient information of the first collaboration set, to determine whether to join the first collaboration set.

S303: Determine whether the data difference degree is greater than a first threshold.

The first network element determines whether the data difference degree is greater than the first threshold.

For example, specifically, when the data difference degree is less than or equal to the first threshold, the first network element determines to join the first collaboration set. For details, refer to "determining to join the first collaboration set" described in step S304. When the data difference degree is greater than the first threshold, the first network element determines not to join the first collaboration set. For details, refer to "determining not to join the first collaboration set" described in step S305.

It may be understood that, because the data difference degree indicates the difference between the data in the first collaboration set and the data in the first network element, when the data difference degree is less than or equal to the first threshold, it indicates that the difference between the data in the first collaboration set and the data in the first network element is small, and the data in the first network element is suitable for performing federated learning. In this case, the first network element determines to join the first collaboration set. For details, refer to "determining to join the first collaboration set" described in step S304. On the contrary, when the data difference degree is greater than the first threshold, it indicates that the difference between the data in the first collaboration set and the data in the first network element is large, and the data in the first network element is not suitable for performing federated learning. In this case, the first network element determines not to join the first collaboration set. For details, refer to "determining not to join the first collaboration set" described in step S305.

It may be understood that, the foregoing deciding, by comparing the data difference degree with the first threshold, whether to join the first collaboration set is merely an example of a method for determining, based on the data difference degree, whether to join the first collaboration set, and should not constitute a limitation on this embodiment of this application.

Optionally, alternatively, when the data difference degree is less than the first threshold, the first network element may determine to join the first collaboration set. For details, refer to "determining to join the first collaboration set" described in step S304. When the data difference degree is greater than or equal to the first threshold, the first network element determines not to join the first collaboration set. For details, refer to "determining not to join the first collaboration set" described in step S305. Alternatively, whether to join the first collaboration set may be determined by using another method that is for magnitude comparison and that is properly transformed. This is not limited in this embodiment of this application.

Optionally, the first threshold may be delivered by the second network element to the first network element along with the first information, and the first threshold may alternatively be a value preconfigured by the first network element. The first threshold may be adjusted based on different application scenarios. According to this embodiment of this application, the first network element may select an appropriate first threshold, to measure the data difference degree, to determine whether to join the first collaboration set.

S304: Determine to join the first collaboration set.

For details, refer to the descriptions in step S303. Details are not described herein again.

S305: Determine not to join the first collaboration set.

For details, refer to the descriptions in step S303. Details are not described herein again.

It may be understood that the foregoing steps S304 and S305 are steps respectively performed in two cases that are mutually exclusive. The first network element chooses, based on a determining result of step S303, to perform step S304 or S305, and steps S304 and S305 should not be understood as steps that are sequentially performed.

According to this embodiment of this application, the first network element may determine, based on the difference between the data in the first collaboration set and the data in the first network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

FIG. 4 is a schematic flowchart of still another federated learning method according to an embodiment of this application. It may be understood that steps S401 to S403 in this embodiment of this application may be considered as a proper supplement after step S203 in FIG. 2. Alternatively, it may be understood that steps S401 to S403 in this embodiment of this application may be considered as a proper supplement after steps S304 and S305 in FIG. 3. Alternatively, it may be understood that the federated learning method in this embodiment of this application may be considered as an embodiment that can be independently performed. This is not limited in this application. The federated learning method provided in this embodiment of this application is applied to the field of communication technologies. The federated learning method includes but is not limited to the following steps.

S401: A first network element sends second information to a second network element, and correspondingly, the second network element receives the second information sent by the first network element.

When the first network element determines to join a first collaboration set, the first network element sends the second information to the second network element. Correspondingly, the second network element receives the second information sent by the first network element.

The second information includes information for maintaining the first collaboration set, and is used to assist the second network element in deciding whether to accept or not to accept the joining the first collaboration set by the first network element to perform federated learning. The first collaboration set includes a collaboration network element used for federated learning.

Optionally, the information for maintaining the first collaboration set may specifically include a quantity of data samples of the first network element, duration occupied by the first network element to perform training based on information about a training model, data distribution information of the first network element, or the like. The second network element may decide, based on one or more of the data sample quantity, the duration occupied for the training, the data distribution information, or the like, whether to accept the joining the first collaboration set by the first network element, so that a dynamic collaboration set can be further maintained, and efficiency and accuracy of the federated learning can be improved.

Optionally, when the first network element determines to join the first collaboration set, in addition to sending the second information to the second network element, the first network element further sends a first message to the second network element, where the first message includes gradient information corresponding to the first network element.

It may be understood that the second information may be carried in the first message and sent to the second network element along with the first message, or the second information may be carried in another message and sent to the second network element. This is not limited in this embodiment of this application.

It may be understood that the first network element in this embodiment of this application is a device equipped with a processor that can be configured to execute computer-executable instructions, and may be a terminal device, for example, a handheld terminal (a mobile phone, a tablet computer, or the like), or an in-vehicle terminal (a wireless terminal in self-driving, or the like). Specifically, the first network element may alternatively be the terminal device (including but not limited to any device of the UE 1 to the UE 8) in FIG. 1, and is configured to perform the federated learning method in this embodiment of this application, to save a resource and improve the efficiency of the federated learning.

It may be understood that the second network element in this embodiment of this application is the device equipped with the processor that can be configured to execute the computer-executable instructions, and may be an access network device like a base station or a transmission point TRP, or may be a server. Specifically, the second network element may be the access network device (including but not limited to any device of the base station 1 and the base station 2) in FIG. 1, and is configured to perform the federated learning method in this embodiment of this application, to save the resource and improve the efficiency of the federated learning.

According to this embodiment of this application, the first network element uploads the second information used to assist the second network element in deciding whether to accept or not to accept the joining the first collaboration set by the first network element. In this way, the second network element may decide, based on the second information, whether to accept the joining the first collaboration set by the first network element, so that a dynamic collaboration set can be further maintained, and the efficiency and the accuracy of the federated learning can be improved. Specifically, this can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency and the accuracy of the federated learning.

S402: The second network element determines whether to accept or not to accept the joining the first collaboration set by the first network element.

After receiving the second information sent by the first network element, the second network element determines, based on the second information, whether to accept or not to accept the joining the first collaboration set by the first network element to perform federated learning.

When the second information meets a condition for performing federated learning by the first collaboration set, the second network element determines to accept the joining the first collaboration set by the first network element to perform federated learning. On the contrary, when the second information does not meet the condition for performing federated learning by the first collaboration set, the second network element determines not to accept the joining the first collaboration set by the first network element to perform federated learning.

Herein, to describe in more detail that the second network element determines, based on the second information, whether to accept or not to accept the joining the first collaboration set by the first network element, the following provides several example methods.

For example, the second network element sets a time window (for example, a timer) to collect updated gradient information of each client network element (for example, the first network element). For a client network element arrives after timeout (which means that a set time window is exceeded or a time range indicated by the timer is exceeded), the second network element determines not to accept joining the first collaboration set by the client network element. Optionally, the second network element may further obtain, based on training duration carried in the second network element and total duration (a time period from time when the second network element delivers a global model to time when updated gradient information of the client network element is collected), transmission duration corresponding to the client network element. By comparing with another client network element, it is clarified that a main cause of timeout of the client network element is that a transmission rate is excessively low or the federated training is excessively slow, to provide a corresponding adjustment policy and feed back the adjustment policy to the client network element.

For example, the second network element may obtain overall data distribution information through calculation based on a quantity of data samples and data distribution information of each client network element (for example, the first network element). Then, the second network element samples a preset data set of the second network element based on overall data distribution analysis, to obtain a test data set of the second network element. The second network element aggregates a local model uploaded by each client network element to obtain an aggregation model. The second network element uses the test data set to input the aggregation model and a local model uploaded by each client network element, and calculates a gradient Lipschitz $\{L_k\}$ corresponding to each client network element. Optionally, the gradient calculation may be implemented in the following formula:

$$\{L_k\} = \max_{z_i \in D_c} \frac{\left\| \nabla_\theta \ell(z_i; \theta_t^k) - \nabla_\theta \ell(z_i; \bar{\theta}_t) \right\|}{\left\| \theta_t^k - \bar{\theta}_t \right\|}$$

A smaller gradient Lipschitz is more conducive to global model convergence after aggregation. Therefore, a gradient corresponding to a client network element whose $\{L_k\}$ is greater than a threshold is not updated to a current global model. Correspondingly, the second network element determines not to accept joining the first collaboration set by the client network element.

S403: The second network element sends rejection information to the first network element, and correspondingly, the first network element receives the rejection information sent by the second network element.

When the second network element does not accept the joining the first collaboration set by the first network element, the second network element further sends the rejection information to the first network element. Correspondingly, the first network element receives the rejection information sent by the second network element, to notify the first network element that the second network element already rejects accepting the joining the first collaboration set by the first network element.

The rejection information includes at least one of a rejection reason and an improvement measure. The rejection reason includes a reason for rejecting the joining the first collaboration set by the first network element, and the improvement measure includes a measure for helping the first network element join the first collaboration set.

For example, when the second information includes the duration occupied by the first network element to perform training based on the information about the training model, the second network element learns, based on the second information, that the duration occupied by the first network element to perform training based on the information about the training model is excessively long, and the second network element rejects accepting the joining the first collaboration set by the first network element, and sends the rejection information to the first network element. The rejection reason included in the rejection information is that the duration occupied for the training is excessively long. A corresponding improvement measure may be indicating the first network element to configure a new training parameter epoch.

For example, when the second information includes time of transmission between the first network element and the second network element, the second network element learns, based on the second information, that the time of the transmission between the first network element and the second network element is excessively long, and the second network element rejects accepting the joining the first collaboration set by the first network element, and sends the rejection information to the first network element. The rejection reason included in the rejection information is that the time of the transmission is excessively long. A corresponding improvement measure may be indicating the first network element to increase a transmission priority and improve a minimum guaranteed bit rate.

For example, when the second information includes the data set of the first network element (for example, the data sample quantity or the data distribution information), the second network element learns, based on the second information, that data in the first network element does not match data in the first collaboration set, and the second network element rejects accepting the joining the first collaboration set by the first network element, and sends the rejection information to the first network element. The rejection reason included in the rejection information is that the data does not match.

It may be understood that step S403 is an optional step, and when the second network element accepts the joining the first collaboration set by the first network element, step S403 is not performed.

According to this embodiment of this application, the second network element decides, based on the second information, whether to accept the joining the first collaboration set by the first network element, so that the dynamic collaboration set can be further maintained, and the efficiency and the accuracy of the federated learning can be improved. Specifically, this can avoid the waste of the computing power resource and the communication resource that is caused because the data sets of the first network element cannot be aggregated, and improve the resource utilization. In addition, this can filter out the inappropriate data set, to reduce the calculation amount and the communication amount of the second network element, and improve the efficiency and the accuracy of the federated learning. In addition, the second network element may further feed back the rejection information to the first network element, to optimize configuration information used by the first network element to perform federated learning, to improve efficiency and accuracy of subsequently performing federated learning by the first network element.

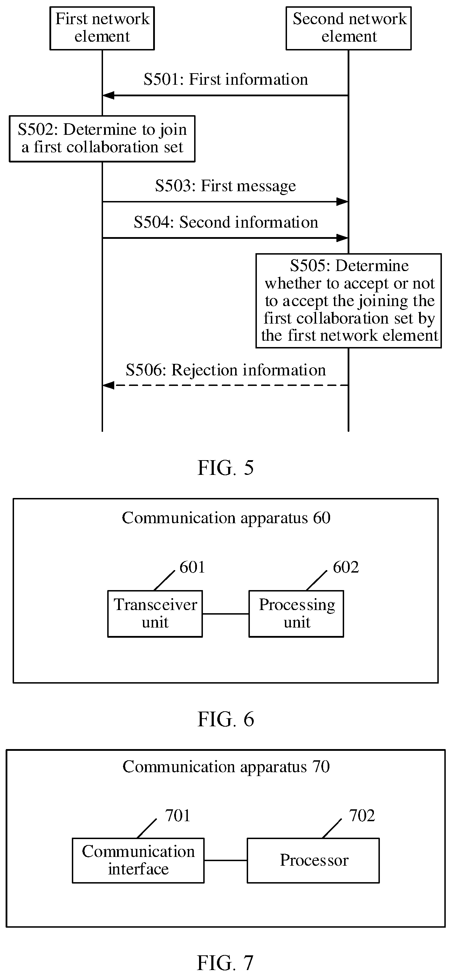

FIG. 5 is a schematic flowchart of still another federated learning method according to an embodiment of this application. It may be understood that steps S504 to S506 in this embodiment of this application may be considered as a proper supplement after step S203 in FIG. 2. Alternatively, it may be understood that steps S504 to S506 in this embodiment of this application may be considered as a proper supplement after steps S304 and S305 in FIG. 3. Alternatively, it may be understood that steps S501 to S503 in this embodiment of this application may be considered as a proper supplement before step S401 in FIG. 4. Alternatively, it may be understood that the federated learning method in this embodiment of this application may be considered as an embodiment that can be independently performed. This is not limited in this application. The federated learning method provided in this embodiment of this application is applied to the field of communication technologies. The federated learning method includes but is not limited to the following steps.

S501: A second network element sends first information to a first network element, and correspondingly, the first network element receives the first information sent by the second network element.

For details, refer to the descriptions of step S201 in FIG. 2 or the descriptions of step S301 in FIG. 3. Details are not described herein again.

S502: The first network element determines to join a first collaboration set.

For details, refer to the descriptions of step S202 in FIG. 2 or the descriptions of steps S302, S303, and S304 in FIG. 3. Details are not described herein again.

S503: The first network element sends a first message to the second network element, and correspondingly, the second network element receives the first message sent by the first network element.

For details, refer to the descriptions of step S203 in FIG. 2. Details are not described herein again.

S504: The first network element sends second information to the second network element, and correspondingly, the second network element receives the second information sent by the first network element.

For details, refer to the descriptions of step S401 in FIG. 4. Details are not described herein again.

S505: The second network element determines whether to accept or not to accept joining the first collaboration set by the first network element.

For details, refer to the descriptions of step S402 in FIG. 4. Details are not described herein again.

S506: The second network element sends rejection information to the first network element, and correspondingly, the first network element receives the rejection information sent by the second network element.

For details, refer to the descriptions of step S403 in FIG. 4. Details are not described herein again.

According to this embodiment of this application, the second network element decides, based on the second information, whether to accept the joining the first collaboration set by the first network element, so that a dynamic collaboration set can be further maintained, and efficiency and accuracy of federated learning can be improved. Specifically, this can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve the efficiency and the accuracy of the federated learning. In addition, the second network element may further feed back the rejection information to the first network element, to optimize configuration information used by the first network element to perform federated learning, to improve efficiency and accuracy of subsequently performing federated learning by the first network element.

The foregoing describes in detail the methods provided in embodiments of this application. The following provides an apparatus for implementing any one of the methods in embodiments of this application. For example, an apparatus is provided, and the apparatus includes units (or means) configured to implement steps performed by a device in any one of the foregoing methods.

FIG. 6 is a diagram of a structure of a communication apparatus according to an embodiment of this application.

As shown in FIG. 6, the communication apparatus 60 may include a transceiver unit 601 and a processing unit 602. The transceiver unit 601 and the processing unit 602 may be software, hardware, or a combination of software and hardware.

The transceiver unit 601 may implement a sending function and/or a receiving function, and the transceiver unit 601 may also be described as a communication unit. Alternatively, the transceiver unit 601 may be a unit integrating an obtaining unit and a sending unit. The obtaining unit is configured to implement the receiving function, and the sending unit is configured to implement the sending function. Optionally, the transceiver unit 601 may be configured to receive information sent by another apparatus, and may be further configured to send information to the another apparatus.

In a possible design, the communication apparatus 60 may correspond to the first network element in the method embodiments shown in FIG. 2, FIG. 3, FIG. 4, and FIG. 5. For example, the communication apparatus 60 may be the first network element, or may be a chip in the first network element. The communication apparatus 60 may include units configured to perform operations performed by the first network element in the method embodiments shown in FIG. 2, FIG. 3, FIG. 4, and FIG. 5. In addition, the units in the communication apparatus 60 are respectively for implementing the operations performed by the first network element in the method embodiments shown in FIG. 2, FIG. 3, FIG. 4, and FIG. 5. The units are described as follows.

The transceiver unit 601 is configured to receive first information from a second network element, where the first information includes gradient information of a first collaboration set corresponding to the second network element, and the first collaboration set includes a collaboration network element configured to perform federated learning.

The processing unit 602 is configured to determine, based on the first information, to join the first collaboration set.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In a possible implementation, the processing unit 602 is specifically configured to obtain a data difference degree based on the first information, where the data difference degree indicates a difference between data in the first collaboration set and data in the communication apparatus.

The processing unit 602 is further specifically configured to: when the data difference degree is less than or equal to a first threshold, determine to join the first collaboration set.

In a possible implementation, the processing unit 602 is specifically configured to obtain, based on information about a training model, gradient information corresponding to the communication apparatus.

The processing unit 602 is further specifically configured to obtain the data difference degree based on the gradient information corresponding to the communication apparatus, the sum of the norms of the gradients corresponding to the first collaboration set, and the sum of the gradients corresponding to the first collaboration set.

In a possible implementation, the processing unit 602 is specifically configured to obtain, based on the information about the training model, the gradient information corresponding to the communication apparatus.

The processing unit 602 is further specifically configured to obtain the data difference degree based on the gradient information corresponding to the communication apparatus and the information about each gradient corresponding to the first collaboration set.

In a possible implementation, the information about the training model is from the second network element; or the information about the training model is information preconfigured by the communication apparatus.

In a possible implementation, the data difference degree includes:

$$\text{DG\_local} = \frac{\varphi_1 + |\nabla\_local|^2}{|\varphi_2 + \nabla\_local|^2} \text{ or } \text{DG\_local} = \frac{\sum_{j=1}^{N}|\nabla\_j|^2 + |\nabla\_local|^2}{\left|\sum_{j=1}^{N}\nabla\_j + \nabla\_local\right|^2}.$$

DG_local is the data difference degree, $\varphi_1$ is the sum of the norms of the gradients corresponding to the first collaboration set, $\varphi_2$ is the sum of the gradients corresponding to the first collaboration set, $\nabla\_local$ is the gradient information corresponding to the communication apparatus, $\nabla\_j$ is the information about each gradient corresponding to the first collaboration set, and N is a quantity of collaboration network elements included in the first collaboration set.

In a possible implementation, the first threshold is carried in the first information; or the first threshold is a preconfigured value.

In a possible implementation, the transceiver unit 601 is specifically configured to receive a broadcast message, where the broadcast message includes a message indicating the first information; or

the transceiver unit 601 is further configured to send a first request to the second network element, where the first request is used to request to obtain the first information.

The transceiver unit 601 is configured to receive the first information sent by the second network element.

In a possible implementation, the transceiver unit 601 is further configured to send a first message to the second network element, where the first message includes the gradient information corresponding to the communication apparatus.

In a possible implementation, the transceiver unit 601 is further configured to send second information to the second network element, where the second information includes information for maintaining the first collaboration set.

In a possible implementation, the information for maintaining the first collaboration set includes at least one of the following:

a quantity of data samples of the communication apparatus, duration occupied by the communication apparatus to perform training based on the information about the training model, or data distribution information of the communication apparatus.

In a possible implementation, the transceiver unit 601 is further configured to: when the second network element does not accept the joining the first collaboration set by the communication apparatus, receive rejection information from the second network element.

In a possible implementation, the rejection information includes at least one of a rejection reason and an improvement measure. The rejection reason includes a reason for rejecting the joining the first collaboration set by the communication apparatus, and the improvement measure includes a measure for helping the communication apparatus join the first collaboration set.

In another possible design, the communication apparatus 60 may correspond to the second network element in the method embodiments shown in FIG. 2, FIG. 3, FIG. 4, and FIG. 5. For example, the communication apparatus 60 may be the second network element, or may be a chip in the second network element. The communication apparatus 60 may include units configured to perform the operations performed by the second network element in the method embodiments shown in FIG. 2, FIG. 3, FIG. 4, and FIG. 5. In addition, the units in the communication apparatus 60 are respectively for implementing the operations performed by the second network element in the method embodiments shown in FIG. 2, FIG. 3, FIG. 4, and FIG. 5. The units are described as follows.

The processing unit 602 is configured to obtain first information, where the first information includes gradient information of a first collaboration set corresponding to the communication apparatus, and the first collaboration set includes a collaboration network element configured to perform federated learning.

The transceiver unit 601 is configured to send the first information to the first network element, where the first information is used by the first network element to determine to join the first collaboration set.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In a possible implementation, the transceiver unit 601 is specifically configured to send a broadcast message, where the broadcast message includes the message indicating the first information; or

the transceiver unit 601 is further configured to receive a first request sent by the first network element, where the first request is used to request to obtain the first information.

The transceiver unit 601 is configured to send the first information to the first network element.

In a possible implementation, the transceiver unit 601 is further configured to receive a first message sent by the first network element, where the first message includes gradient information corresponding to the first network element.

In a possible implementation, the transceiver unit 601 is further configured to receive second information sent by the first network element, where the second information includes information for maintaining the first collaboration set.

The processing unit 602 is further configured to determine, based on the second information, whether to accept or not to accept joining the first collaboration set by the first network element.

In a possible implementation, the information for maintaining the first collaboration set includes at least one of the following:

a quantity of data samples of the first network element, duration occupied by the first network element to perform training based on information about a training model, or data distribution information of the first network element.

In a possible implementation, the transceiver unit 601 is further configured to: when the communication apparatus does not accept the joining the first collaboration set by the first network element, send rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In another possible design, the communication apparatus 60 may correspond to the first network element in the method embodiments shown in FIG. 2, FIG. 3, FIG. 4, and FIG. 5. For example, the communication apparatus 60 may be the first network element, or may be a chip in the first network element. The communication apparatus 60 may include the units configured to perform operations performed by the first network element in the method embodiments shown in FIG. 2, FIG. 3, FIG. 4, and FIG. 5. In addition, the units in the communication apparatus 60 are respectively for implementing the operations performed by the first network element in the method embodiments shown in FIG. 2, FIG. 3, FIG. 4, and FIG. 5. The units are described as follows.

The processing unit 602 is configured to obtain second information, where the second information includes information for maintaining a first collaboration set corresponding to a second network element, and the first collaboration set includes a collaboration network element configured to perform federated learning.

The transceiver unit 601 is configured to send the second information to the second network element.

In a possible implementation, the information for maintaining the first collaboration set corresponding to the second network element includes at least one of the following:

a quantity of data samples of the communication apparatus, duration occupied by the communication apparatus to perform training based on information about a training model, or data distribution information of the communication apparatus.

In a possible implementation, the transceiver unit 601 is further configured to: when the second network element does not accept joining the first collaboration set by the communication apparatus, receive rejection information from the second network element.

In a possible implementation, the rejection information includes at least one of a rejection reason and an improvement measure. The rejection reason includes a reason for rejecting the joining the first collaboration set by the communication apparatus, and the improvement measure includes a measure for helping the communication apparatus join the first collaboration set.

In another possible design, the communication apparatus 60 may correspond to the second network element in the method embodiments shown in FIG. 2, FIG. 3, FIG. 4, and FIG. 5. For example, the communication apparatus 60 may be the second network element, or may be a chip in the second network element. The communication apparatus 60 may include the units configured to perform the operations performed by the second network element in the method embodiments shown in FIG. 2, FIG. 3, FIG. 4, and FIG. 5. In addition, the units in the communication apparatus 60 are respectively for implementing the operations performed by the second network element in the method embodiments shown in FIG. 2, FIG. 3, FIG. 4, and FIG. 5. The units are described as follows.

The transceiver unit 601 is configured to receive second information sent by a first network element, where the second information includes information for maintaining a first collaboration set corresponding to the communication apparatus, and the first collaboration set includes a collaboration network element configured to perform federated learning.

The processing unit 602 is configured to determine, based on the second information, whether to accept or not to accept joining the first collaboration set by the first network element.

In a possible implementation, the information for maintaining the first collaboration set corresponding to the communication apparatus includes at least one of the following:

a quantity of data samples of the first network element, duration occupied by the first network element to perform training based on information about a training model, or data distribution information of the first network element.

In a possible implementation, the transceiver unit 601 is further configured to: when the communication apparatus does not accept the joining the first collaboration set by the first network element, send rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In this embodiment of this application, a part or all of the units of the apparatus shown in FIG. 6 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. In actual application, a function of one unit may be implemented by a plurality of units, or functions of a plurality of units may be implemented by one unit. In another embodiment of this application, an electronic device may alternatively include another unit. In actual application, the functions may be implemented with assistance of the another unit, and may be implemented by a plurality of units in collaboration.

It should be noted that, for implementation of each unit, refer to corresponding descriptions in the method embodiments shown in FIG. 2, FIG. 3, FIG. 4, and FIG. 5.

In the communication apparatus 60 described in FIG. 6, the first network element may decide, based on the gradient information that is of the first collaboration set and that is delivered by the second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

FIG. 7 is a diagram of a structure of a communication apparatus according to an embodiment of this application.

It should be understood that the communication apparatus 70 shown in FIG. 7 is merely an example. The communication apparatus in this embodiment of this application may further include another component, or includes components whose functions are similar to those of components in FIG. 7, or does not need to include all components in FIG. 7.

The communication apparatus 70 includes a communication interface 701 and at least one processor 702.

The communication apparatus 70 may correspond to any network element or device in the first network element or the second network element. The communication interface 701 is configured to receive and receive a signal. The at least one processor 702 executes program instructions, so that the communication apparatus 70 implements a corresponding procedure of a method performed by a corresponding device in the foregoing method embodiments.

In a possible design, the communication apparatus 70 may correspond to the first network element in the method embodiments shown in FIG. 2, FIG. 3, FIG. 4, and FIG. 5. For example, the communication apparatus 70 may be the first network element, or may be a chip in the first network element. The communication apparatus 70 may include components configured to perform the operations performed by the first network element in the method embodiments, and the components in the communication apparatus 70 are respectively for implementing the operations performed by the first network element in the method embodiments. Details may be as follows.

The first network element receives first information from the second network element, where the first information includes gradient information of a first collaboration set corresponding to the second network element, and the first collaboration set includes a collaboration network element configured to perform federated learning.

The first network element determines, based on the first information, to join the first collaboration set.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In a possible implementation, that the first network element determines, based on the first information, to join the first collaboration set includes:

The first network element obtains a data difference degree based on the first information, where the data difference degree indicates a difference between data in the first collaboration set and data in the first network element.

When the data difference degree is less than or equal to a first threshold, the first network element determines to join the first collaboration set.

In a possible implementation, that the first network element obtains a data difference degree based on the first information includes:

The first network element obtains, based on information about a training model, gradient information corresponding to the first network element.

The first network element obtains the data difference degree based on the gradient information corresponding to the first network element, the sum of the norms of the gradients corresponding to the first collaboration set, and the sum of the gradients corresponding to the first collaboration set.

In a possible implementation, that the first network element obtains a data difference degree based on the first information includes:

The first network element obtains, based on the information about the training model, the gradient information corresponding to the first network element.

The first network element obtains the data difference degree based on the gradient information corresponding to the first network element and the information about each gradient corresponding to the first collaboration set.

In a possible implementation, the information about the training model is from the second network element; or the information about the training model is information preconfigured by the first network element.

In a possible implementation, the data difference degree includes:

$$\text{DG\_local} = \frac{\varphi_1 + |\nabla\_local|^2}{|\varphi_2 + \nabla\_local|^2} \text{ or } \text{DG\_local} = \frac{\sum_{j=1}^{N}|\nabla\_j|^2 + |\nabla\_local|^2}{\left|\sum_{j=1}^{N}\nabla\_j + \nabla\_local\right|^2}.$$

DG_local is the data difference degree, $\varphi_1$ is the sum of the norms of the gradients corresponding to the first collaboration set, $\varphi_2$ is the sum of the gradients corresponding to the first collaboration set, $\nabla\_local$ is the gradient information corresponding to the first network element, $\nabla\_j$ is the information about each gradient corresponding to the first collaboration set, and N is a quantity of collaboration network elements included in the first collaboration set.

In a possible implementation, the first threshold is carried in the first information; or the first threshold is a preconfigured value.

In a possible implementation, that the first network element receives the first information from the second network element includes:

The first network element receives a broadcast message, where the broadcast message includes a message indicating the first information; or
the first network element sends a first request to the second network element, where the first request is used to request to obtain the first information.

The first network element receives the first information sent by the second network element.

In a possible implementation, the method further includes:

The first network element sends a first message to the second network element, where the first message includes the gradient information corresponding to the first network element.

In a possible implementation, the method further includes:

The first network element sends second information to the second network element, where the second information includes information for maintaining the first collaboration set.

In a possible implementation, the information for maintaining the first collaboration set includes at least one of the following:

a quantity of data samples of the first network element, duration occupied by the first network element to perform training based on the information about the training model, or data distribution information of the first network element.

In a possible implementation, the method further includes:

When the second network element does not accept joining the first collaboration set by the first network element, the first network element receives rejection information from the second network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In another possible design, the communication apparatus 70 may correspond to the second network element in the method embodiments shown in FIG. 2, FIG. 3, FIG. 4, and FIG. 5. For example, the communication apparatus 70 may be the second network element, or may be a chip in the second network element. The communication apparatus 70 may include components configured to perform the operations performed by the second network element in the method embodiments, and the components in the communication apparatus 70 are respectively for implementing the operations performed by the second network element in the method embodiments. Details may be as follows.

The second network element obtains first information, where the first information includes gradient information of a first collaboration set corresponding to the second network element, and the first collaboration set includes a collaboration network element configured to perform federated learning.

The second network element sends the first information to a first network element, where the first information is used by the first network element to determine to join the first collaboration set.

In a possible implementation, the gradient information of the first collaboration set includes at least one of the following:

a sum of norms of gradients corresponding to the first collaboration set and a sum of the gradients corresponding to the first collaboration set; or information about each gradient corresponding to the first collaboration set.

In a possible implementation, that the second network element sends the first information to the first network element includes:

The second network element sends a broadcast message, where the broadcast message includes a message indicating the first information; or
the second network element receives a first request sent by the first network element, where the first request is used to request to obtain the first information.

The second network element sends the first information to the first network element.

In a possible implementation, the method further includes:
The second network element receives a first message sent by the first network element, where the first message includes gradient information corresponding to the first network element.

In a possible implementation, the method further includes:
The second network element receives second information sent by the first network element, where the second information includes information for maintaining the first collaboration set.

The second network element determines, based on the second information, whether to accept or not to accept joining the first collaboration set by the first network element.

In a possible implementation, the information for maintaining the first collaboration set includes at least one of the following:

a quantity of data samples of the first network element, duration occupied by the first network element to perform training based on information about a training model, or data distribution information of the first network element.

In a possible implementation, the method further includes:
When the second network element does not accept the joining the first collaboration set by the first network element, the second network element sends rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In another possible design, the communication apparatus 70 may correspond to the first network element in the method embodiments shown in FIG. 2, FIG. 3, FIG. 4, and FIG. 5. For example, the communication apparatus 70 may be the first network element, or may be a chip in the first network element. The communication apparatus 70 may include components configured to perform the operations performed by the first network element in the method embodiments, and the components in the communication apparatus 70 are respectively for implementing the operations performed by the first network element in the method embodiments. Details may be as follows.

The first network element obtains second information, where the second information includes information for maintaining a first collaboration set corresponding to a second network element, and the first collaboration set includes a collaboration network element configured to perform federated learning.

The first network element sends the second information to the second network element.

In a possible implementation, the information for maintaining the first collaboration set corresponding to the second network element includes at least one of the following:

a quantity of data samples of the first network element, duration occupied by the first network element to perform training based on information about a training model, or data distribution information of the first network element.

In a possible implementation, the method further includes:
When the second network element does not accept joining the first collaboration set by the first network element, the first network element receives rejection information from the second network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In another possible design, the communication apparatus 70 may correspond to the second network element in the method embodiments shown in FIG. 2, FIG. 3, FIG. 4, and FIG. 5. For example, the communication apparatus 70 may be the second network element, or may be a chip in the second network element. The communication apparatus 70 may include components configured to perform the operations performed by the second network element in the method embodiments, and the components in the communication apparatus 70 are respectively for implementing the operations performed by the second network element in the method embodiments. Details may be as follows.

The second network element receives second information sent by a first network element, where the second information includes information for maintaining a first collaboration set corresponding to the second network element, and the first collaboration set includes a collaboration network element configured to perform federated learning.

The second network element determines, based on the second information, whether to acct joining the first collaboration set by the first network element.

In a possible implementation, the information for maintaining the first collaboration set corresponding to the second network element includes at least one of the following:

a quantity of data samples of the first network element, duration occupied by the first network element to perform training based on information about a training model, or data distribution information of the first network element.

In a possible implementation, the method further includes:

When the second network element does not accept the joining the first collaboration set by the first network element, the second network element sends rejection information to the first network element.

In a possible implementation, the rejection information includes at least one of a rejection reason and an improvement measure. The rejection reason includes a reason for rejecting the joining the first collaboration set by the first network element, and the improvement measure includes a measure for helping the first network element join the first collaboration set.

In the communication apparatus 70 described in FIG. 7, the first network element may decide, based on the gradient information that is of the first collaboration set and that is delivered by the second network element, whether to join the first collaboration set to perform federated learning. This can avoid waste of a computing power resource and a communication resource that is caused because data sets of the first network element cannot be aggregated, and improve resource utilization. In addition, this can filter out an inappropriate data set, to reduce a calculation amount and a communication amount of the second network element, and improve efficiency of the federated learning.

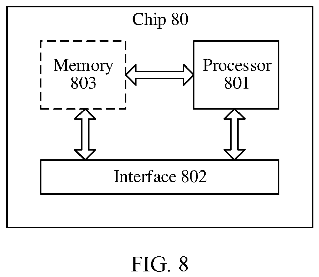

For a case in which the communication apparatus may be a chip or a chip system, refer to a diagram of a structure of a chip shown in FIG. 8.

As shown in FIG. 8, the chip 80 includes a processor 801 and an interface 802. There may be one or more processors 801, and there may be a plurality of interfaces 802. It should be noted that a function corresponding to each of the processor 801 and the interface 802 may be implemented by using a hardware design, or may be implemented by using a software design, or may be implemented by combining software and hardware. This is not limited herein.

Optionally, the chip 80 may further include a memory 803, and the memory 803 is configured to store necessary program instructions and data.

In this application, the processor 801 may be configured to: invoke, from the memory 803, a program for implementing, on one or more devices or network elements of the first network element and the second network element, the federated learning method provided in one or more embodiments of this application, and execute instructions included in the program. The interface 802 may be configured to output an execution result of the processor 801. In this application, the interface 802 may be specifically configured to output messages or information of the processor 801.

For the federated learning method provided in one or more embodiments of this application, refer to the embodiments shown in FIG. 2, FIG. 3, FIG. 4, and FIG. 5. Details are not described herein again.

The processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 2, FIG. 3, FIG. 4, and FIG. 5 may be implemented.

According to the methods provided in embodiments of this application, an embodiment of this application further provides a computer program product. The computer program product includes a computer program. When the computer program is run on a processor, the methods shown in FIG. 2, FIG. 3, FIG. 4, and FIG. 5 may be implemented.

An embodiment of this application further provides a system. The system includes at least one of the communication apparatus 60, the communication apparatus 70, or the chip 80, and is configured to perform steps performed by a corresponding device in any one of the embodiments in FIG. 2, FIG. 3, FIG. 4, and FIG. 5.

An embodiment of this application further provides a system. The system includes a first network element and a second network element. The first network element is configured to perform the steps performed by the first network element in any one of the embodiments in FIG. 2, FIG. 3, FIG. 4, and FIG. 5. The second network element is configured to perform the steps performed by the second network element in any one of the embodiments in FIG. 2, FIG. 3, FIG. 4, and FIG. 5.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, may be a system on chip (system on chip, SoC), may be a central processor unit (central processor unit, CPU), may be a network processor (network processor, NP), may be a digital signal processing (digital signal processor, DSP) circuit, may be a micro controller unit (micro controller unit, MCU), or may be a programmable controller (programmable logic device, PLD) or another integrated chip. The processing apparatus may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in a decoding processor. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

All or some of the embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The units in the foregoing apparatus embodiments totally correspond to electronic devices in the method embodiments, and corresponding modules or units perform corresponding steps. For example, the communication unit (the transceiver) performs receiving or sending steps in the method embodiments, and steps other than sending and receiving may be performed by the processing unit (the processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A federated learning method, comprising:

   receiving, by a first network element, first information from a second network element, wherein the first information comprises gradient information of a first collaboration set corresponding to the second network element, and the first collaboration set comprises a collaboration network element configured to perform federated learning; and
   determining, by the first network element based on the first information, to join the first collaboration set.

2. The method according to claim 1, wherein the gradient information of the first collaboration set comprises at least one of the following:
   a sum of norms of gradients corresponding to the first collaboration set and a sum of the gradients corresponding to the first collaboration set; or information about each gradient corresponding to the first collaboration set.

**3.** The method according to claim 1 or 2, wherein the determining, by the first network element based on the first information, to join the first collaboration set comprises:

obtaining, by the first network element, a data difference degree based on the first information, wherein the data difference degree indicates a difference between data in the first collaboration set and data in the first network element; and
when the data difference degree is less than or equal to a first threshold, determining, by the first network element, to join the first collaboration set.

**4.** The method according to claim 3, wherein the obtaining, by the first network element, a data difference degree based on the first information comprises:

obtaining, by the first network element based on information about a training model, gradient information corresponding to the first network element; and
obtaining, by the first network element, the data difference degree based on the gradient information corresponding to the first network element, the sum of the norms of the gradients corresponding to the first collaboration set, and the sum of the gradients corresponding to the first collaboration set.

**5.** The method according to claim 3, wherein the obtaining, by the first network element, a data difference degree based on the first information comprises:

obtaining, by the first network element based on information about a training model, gradient information corresponding to the first network element; and
obtaining, by the first network element, the data difference degree based on the gradient information corresponding to the first network element and the information about each gradient corresponding to the first collaboration set.

**6.** The method according to claim 4 or 5, wherein the information about the training model is from the second network element; or the information about the training model is information preconfigured by the first network element.

**7.** The method according to any one of claims 3 to 6, wherein the data difference degree comprises:

$$\text{DG\_local} = \frac{\varphi_1 + |\nabla\_local|^2}{|\varphi_2 + \nabla\_local|^2} \quad \text{or} \quad \text{DG\_local} = \frac{\sum_{j=1}^{N} |\nabla\_j|^2 + |\nabla\_local|^2}{\left|\sum_{j=1}^{N} \nabla\_j + \nabla\_local\right|^2},$$

wherein
DG_local is the data difference degree, $\varphi_1$ is the sum of the norms of the gradients corresponding to the first collaboration set, $\varphi_2$ is the sum of the gradients corresponding to the first collaboration set, $\nabla\_local$ is the gradient information corresponding to the first network element, $\nabla\_j$ is the information about each gradient corresponding to the first collaboration set, and N is a quantity of collaboration network elements comprised in the first collaboration set.

**8.** The method according to any one of claims 3 to 7, wherein the first threshold is carried in the first information; or the first threshold is a preconfigured value.

**9.** The method according to any one of claims 1 to 8, wherein the receiving, by a first network element, first information from a second network element comprises:

receiving, by the first network element, a broadcast message, wherein the broadcast message comprises a message indicating the first information; or
sending, by the first network element, a first request to the second network element, wherein the first request is used to request to obtain the first information; and
receiving, by the first network element, the first information sent by the second network element.

**10.** The method according to any one of claims 1 to 9, wherein the method further comprises:
sending, by the first network element, a first message to the second network element, wherein the first message comprises the gradient information corresponding to the first network element.

11. The method according to any one of claims 1 to 10, wherein the method further comprises:
sending, by the first network element, second information to the second network element, wherein the second information comprises information for maintaining the first collaboration set.

12. The method according to claim 11, wherein the information for maintaining the first collaboration set comprises at least one of the following:
a quantity of data samples of the first network element, duration occupied by the first network element to perform training based on the information about the training model, or data distribution information of the first network element.

13. The method according to claim 11 or 12, wherein the method further comprises:
when the second network element does not accept the joining the first collaboration set by the first network element, receiving, by the first network element, rejection information from the second network element.

14. The method according to claim 13, wherein the rejection information comprises at least one of a rejection reason and an improvement measure, wherein the rejection reason comprises a reason for rejecting the joining the first collaboration set by the first network element, and the improvement measure comprises a measure for helping the first network element join the first collaboration set.

15. A federated learning method, comprising:

obtaining, by a second network element, first information, wherein the first information comprises gradient information of a first collaboration set corresponding to the second network element, and the first collaboration set comprises a collaboration network element configured to perform federated learning; and
sending, by the second network element, the first information to a first network element, wherein the first information is used by the first network element to determine to join the first collaboration set.

16. The method according to claim 15, wherein the gradient information of the first collaboration set comprises at least one of the following:
a sum of norms of gradients corresponding to the first collaboration set and a sum of the gradients corresponding to the first collaboration set; or information about each gradient corresponding to the first collaboration set.

17. The method according to claim 15 or 16, wherein the sending, by the second network element, the first information to a first network element comprises:

sending, by the second network element, a broadcast message, wherein the broadcast message comprises a message indicating the first information; or
receiving, by the second network element, a first request sent by the first network element, wherein the first request is used to request to obtain the first information; and
sending, by the second network element, the first information to the first network element.

18. The method according to any one of claims 15 to 17, wherein the method further comprises:
receiving, by the second network element, a first message sent by the first network element, wherein the first message comprises gradient information corresponding to the first network element.

19. The method according to any one of claims 15 to 18, wherein the method further comprises:

receiving, by the second network element, second information sent by the first network element, wherein the second information comprises information for maintaining the first collaboration set; and
determining, by the second network element based on the second information, whether to accept or not to accept the joining the first collaboration set by the first network element.

20. The method according to claim 19, wherein the information for maintaining the first collaboration set comprises at least one of the following:
a quantity of data samples of the first network element, duration occupied by the first network element to perform training based on information about a training model, or data distribution information of the first network element.

21. The method according to claim 19 or 20, wherein the method further comprises:
when the second network element does not accept the joining the first collaboration set by the first network element, sending, by the second network element, rejection information to the first network element.

22. The method according to claim 21, wherein the rejection information comprises at least one of a rejection reason and an improvement measure, wherein the rejection reason comprises a reason for rejecting the joining the first collaboration set by the first network element, and the improvement measure comprises a measure for helping the first network element join the first collaboration set.

23. A communication apparatus, comprising:

a transceiver unit, configured to receive first information from a second network element, wherein the first information comprises gradient information of a first collaboration set corresponding to the second network element, and the first collaboration set comprises a collaboration network element configured to perform federated learning; and
a processing unit, configured to determine, based on the first information, to join the first collaboration set.

24. A communication apparatus, comprising:

a processing unit, configured to obtain first information, wherein the first information comprises gradient information of a first collaboration set corresponding to the communication apparatus, and the first collaboration set comprises a collaboration network element configured to perform federated learning; and
a transceiver unit, configured to send the first information to a first network element, wherein the first information is used by the first network element to determine to join the first collaboration set.

25. A communication apparatus, comprising a processor, wherein
when the processor invokes a computer program or instructions in a memory, the method according to any one of claims 1 to 14 is performed, or the method according to any one of claims 15 to 22 is performed.

26. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 14 or claims 15 to 22, to obtain processed data, and the interface is configured to output the processed data.

27. A computer-readable storage medium, wherein
the computer-readable storage medium is configured to store instructions or a computer program; and when the instructions or the computer program is executed, the method according to any one of claims 1 to 14 is implemented, or the method according to any one of claims 15 to 22 is implemented.

28. A computer program product, comprising instructions or a computer program, wherein
when the instructions or the computer program is executed, the method according to any one of claims 1 to 14 is executed, or the method according to any one of claims 15 to 22 is executed.

29. A communication system, comprising at least one of the following: the communication apparatus according to claim 23, the communication apparatus according to claim 24, the communication apparatus according to claim 25, or the communication apparatus according to claim 26.

30. A communication system, comprising a first network element and a second network element, wherein
the first network element is configured to perform the method according to any one of claims 1 to 14, and the second network element is configured to perform the method according to any one of claims 15 to 22.

FIG. 1

FIG. 2

S301

Obtain first information

S302

Obtain a data difference degree based on the first information

S303

Is the data difference degree greater than a first threshold?

No

Yes

S304

Determine to join a first collaboration set

S305

Determine not to join a first collaboration set

FIG. 3

First network element

Second network element

S401: Second information

S402: Determine whether to accept or not to accept joining a first collaboration set by the first network element

S403: Rejection information

FIG. 4

| First network element | | Second network element |
| --- | --- | --- |

S501: First information

S502: Determine to join a first collaboration set

S503: First message

S504: Second information

S505: Determine whether to accept or not to accept the joining the first collaboration set by the first network element

S506: Rejection information

FIG. 5

Communication apparatus 60

601

Transceiver unit

602

Processing unit

FIG. 6

Communication apparatus 70

701

Communication interface

702

Processor

FIG. 7

FIG. 8

## INTERNATIONAL SEARCH REPORT

| International application No. |
| --- |
| **PCT/CN2022/112594** |

| A. | CLASSIFICATION OF SUBJECT MATTER |
| --- | --- |

H04W 24/02(2009.01)i; H04W 60/00(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 联邦学习, 网元, 信息, 梯度, 协议集, 加入, 差异, 阈值, federated, learning, network, element, information, gradient, collaboration, set, join, difference, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113573331 A (HUAWEI TECHNOLOGIES CO., LTD.) 29 October 2021 (2021-10-29) claims 1-35, and description, paragraphs [0190]-[0200] | 1-6, 8-30 |
| A | CN 113240127 A (BLUEHIVE CC (BEIJING) TECHNOLOGY CO., LTD.) 10 August 2021 (2021-08-10) entire document | 1-30 |
| A | CN 111737749 A (CHINA SOUTHERN POWER GRID ELECTRIC POWER RESEARCH INSTITUTE CO., LTD.) 02 October 2020 (2020-10-02) entire document | 1-30 |
| A | WO 2022067355 A1 (QUALCOMM INC.) 31 March 2022 (2022-03-31) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 November 2022** | **20 December 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/112594**

| Patent document cited in search report | | | Publication date (day/month/year) | Patent family member(s) | | | Publication date (day/month/year) |
|---|---|---|---|---|---|---|---|
| CN | 113573331 | A | 29 October 2021 | WO | 2021218274 | A1 | 04 November 2021 |
| CN | 113240127 | A | 10 August 2021 | None | | | |
| CN | 111737749 | A | 02 October 2020 | None | | | |
| WO | 2022067355 | A1 | 31 March 2022 | None | | | |

Form PCT/ISA/210 (patent family annex) (January 2015)